# EUROPÄISCHE PATENTSCHRIFT

(11) **EP 1 431 594 B1**
(45) Veröffentlichungstag und Bekanntmachung des Hinweises auf die Patenterteilung: **22.08.2007**
(21) Anmeldenummer: 03023914.9
(22) Anmeldetag: 21.10.2003
(51) Int. Cl.: F16C 3/10

(54) **Kurbelwelle für eine Kolbenhubmaschine**
Crankshaft for a reciprocating piston engine
Vilebrequin pour machine à piston alternatif

(30) Priorität: 16.12.2002 DE 10258759
(43) Veröffentlichungstag der Anmeldung: 23.06.2004
(73) Patentinhaber: Fraunhofer-Gesellschaft zur Förderung der angewandten Forschung e.V., 80686 München (DE); Volkswagen AG, 38436 Wolfsburg (DE)
(72) Erfinder: Reim, Peter, 38162 Cremlingen (DE); Koch, Christian, 38667 Bad Harzburg (DE); Hertel, Dieter, 09350 Lichtenstein (DE); Kügler, Peter, 30175 Hannover (DE); Lung, Ralf, 09126 Chemnitz (DE); Neese, Paul, 38444 Wolfsburg (DE); Neugebauer, Reimund, 01462 Niederwartha (DE); Seifert, Michael, 08147 Obercrinitz (DE)
(74) Vertreter: Grünecker, Kinkeldey, Stockmair & Schwanhäusser Anwaltssozietät

(56) Entgegenhaltungen:
- EP-A- 0 315 136
- EP-A- 0 315 137
- EP-A- 0 530 890
- WO-A-89/02037
- DE-A1- 3 737 599
- GB-A- 300 853
- GB-A- 743 966
- PATENT ABSTRACTS OF JAPAN Bd. 009, Nr. 084 (M-371), 13. April 1985 (1985-04-13) -& JP 59 212138 A (MAZDA KK), 1. Dezember 1984 (1984-12-01)

## Beschreibung

Die vorliegende Erfindung betrifft eine Kurbelwelle für eine Kolbenhubmaschine gemäß dem Oberbegriff des Patentanspruches 1, insbesondere eine Brennkraftmaschine, mit zumindest einem Kurbelwellenlagerelement zur Lagerung der Kurbelwelle, zumindest einem Hublagerelement zur Lagerung einer Pleuelstange und zumindest einer Kurbelwange, welche das Kurbellagerelement mit dem Hublagerelement verbindet. Weiterhin betrifft die vorliegende Erfindung ein Verfahren zur Montage einer Kurbelwelle.

Für Kolbenhubmaschinen, insbesondere Brennkraftmaschinen, werden einteilige, gegossene bzw. geschmiedete Kurbelwellen verwendet. Diese Art von Kurbelwellen weist eine hohe Festigkeit bei vergleichsweise geringen Herstellkosten auf. Das Gießen bzw. Schmieden derartiger Kurbelwellen erfordert jedoch relativ aufwendige Werkzeuge, so daß eine relativ hohe Stückzahl erforderlich ist, um entsprechend geringe Stückkosten zu erreichen.

Weiterhin wird die Gestalt der Kurbelwelle durch das Gieß- oder Schmiedeverfahren entsprechend festgelegt. Dadurch ergeben sich Gestaltungsformen der Kurbelwelle, die für den späteren Einsatz, beispielsweise hinsichtlich des Gewichts der Kurbelwelle, nicht optimal sind. Für spezielle Anwendungsgebiete wurde daher vorgeschlagen, die Kurbelwelle nach dem Gießen oder Schmieden spanend nachzubearbeiten. Diese Nachbearbeitung ist jedoch sehr kostenintensiv, so daß eine umfangreiche Nachbearbeitung nur in Ausnahmefällen bei besonderen Anforderungen in Betracht kommt.

Weiterhin ist es ein systembedingter Nachteil der einteiligen geschmiedeten oder gegossenen Kurbelwelle, daß das Pleuel der Hubkolbenmaschine mit zweiteiligen Pleuellager ausgebildet werden muß.

Alternativ zu der einteiligen Kurbelwelle wurden bereits mehrteilige, sogenannte gebaute Kurbelwellen vorgeschlagen. Dabei werden die einzelnen Teile der Kurbeilwelle geschmiedet oder gegossen und anschließend meist durch Schweißen miteinander verbunden. Die einzelnen Teile der Kurbeilwelle sind in der Regel einfacher gestaltet als eine komplette Kurbelwelle, so daß sich diese einzelnen Teile durch das jeweilige Gießen oder Schmieden für den geplanten Einsatz besser optimieren lassen. Weiterhin kann bei entsprechender Gestaltung eine Kurbelwelle aus den einzelnen Teilen mit den Pleuelstangen montiert werden. Dabei können einteilige Pleuellager zum Einsatz kommen. Wegen des Montageaufwandes der einzelnen Teile zu einer Kurbelwelle, werden gebaute Kurbelwellen jedoch meist nur bei geringer Stückzahl eingesetzt.

Weiterhin offenbart die EP 0 315 137 A1 eine gebaute Kurbelwelle, bestehend aus Lagerzapfen, Kurbelwangen und Pleuellagerzapfen, wobei die Lagerzapfen zur Verbindung mit den jeweiligen Kurbelwangen mit ihren Enden in Öffnungen in diesen Kurbelwangen eingesetzt und die Fügeverbindung durch plastische Verformung hergestellt wird. Die Lagerzapfen und die Kurbelwangen können aus unterschiedlichen Materialien ausgebildet sein, wobei die Kurbelwangen als Schmiede- oder Stanzteile erzeugt werden und die übrigen Komponenten aus Normteilen gefertigt sind. Um ein Überdrehen der Endbereiche der Zapfen zu vermeiden und um die Verwendung von Normteilen noch weiterzuführen, können die Wellenzapfen aus einem durchgehenden Rohrabschnitt und einer durchmessergrößeren aufgeschobenen Hülse hergestellt sein. Dabei werden die durchmessergrößere aufgeschobene Hülse und der durchgehende Rohrabschnitt innig miteinander mittels hydraulischer Aufweitung verbunden.

Zur Lagerung des Pleuels offenbart die EP 0 315 137 A1 separate Gleitlager oder Wälzlager.

Die JP 59-212138 offenbart ebenfalls eine gebaute Kurbelwelle mit Lagerzapfen, Kurbelwangen und Pleuellagerzapfen wobei die einzelnen Kurbelwangen zweiteilig mit zwei Teilwangen ausgebildet sind, die während der Montage zusammengefügt werden, wobei jeweils eine der Teilwangen mit einem Lagerzapfen und die entsprechend andere mit einem Pleuellagerzapfen verbunden werden.

Auch die EP 0 530 890 A1 offenbart eine gebaute Nockenwelle mit Lagerzapfen, Kurbelwangen und Pleuellagerzapfen, wobei jeweils zwei Kurbelwangen über einen Pleuellagerzapfen miteinander verbunden sind, und wobei die miteinander verbundenen Kurbelwangen jeweils mit einem Lagerzapfen verbunden sind.

Die DE 37 37 599 A1 offenbart eine weitere gebaute Kurbelwelle mit zwei über einen Pleuellagerzapfen verbundene Kurbelwangen, wobei die Pleuelstange entweder unmittelbar auf dem Pleuellagerzapfen gelagert ist und eine Schmiermittelzufuhr an die entsprechende Lagerfläche vorgesehen ist, oder wobei eine Lagerschale an der Außenseite des Pleuellagerzapfens angeordnet ist, welche aus einem porösen Sintermaterial gebildet und mit den Kurbelwangen verbunden ist.

Auch die WO 89/02037, GB 300,853 und EP 0 315 136 A1 offenbaren weitere Kurbelwellen.

Es ist die Aufgabe der vorliegenden Erfindung, eine Kurbelwelle für eine Kolbenhubmaschine sowie ein Verfahren zur Montage einer Kurbelwelle anzugeben, wobei die Kurbelwelle in einfacher Weise herstellbar und mit hoher Flexibilität modifizierbar ist.

Gemäß dem Vorrichtungsaspekt wird diese Aufgabe erfindungsgemäß gelöst durch ein Kurbelwelle für eine Kolbenhubmaschine mit den Merkmalen des Patentanspruches 1.

Durch den modularen Aufbau kann die Kurbelwelle für verschieden Kolbenhubmaschinen in einfacher und kostengünstiger Weise hergestellt werden. Die Optimierung der einzelnen Teile (Module) der Kurbelwelle hinsichtlich ihrer jeweiligen Funktion und im wesentlichen unabhängig voneinander erlaubt einen effizienten Materialeinsatz und somit eine Gewichtsreduktion.

In bevorzugter Weise ist das innere zylinderförmige Element des Kurbellagerelementes als inneres zylinderförmiges Hülsenelement ausgebildet.

Gemäß einer bevorzugten Weiterbildung weist das äußere zylinderförmige Hülsenelement des Kurbellagerelementes eine Beschichtung, insbesondere aus Keramik, auf.

Gemäß einer weiteren bevorzugten Weiterbildung der Kurbelwelle ist das äußere zylinderförmige Hülsenelement des Kurbellagerelementes aus Keramik gebildet.

Gemäß einer bevorzugten Weiterbildung weist das äußere zylinderförmige Hülsenelement des Kurbellagerelementes und/oder das innere zylinderförmige Element des Kurbellagerelementes eine Schmierölkanaleinrichtung auf.

In einer bevorzugten Ausführung weist die Schmierölkanaleinrichtung des Kurbellagerelementes zumindest einen axialen Kanalabschnitt auf, der sich in axialer Richtung des Kurbellagerelementes erstreckt.

In bevorzugter Weise ist der axiale Kanalabschnitt nutförmig in der inneren Umfangsfläche des äußeren zylinderförmigen Hülsenelements des Kurbellagerelementes und/oder in der äußeren Umfangsfläche des inneren zylinderförmigen Elements des Kurbellagerelementes ausgebildet.

In einer bevorzugten Ausführung weist die Schmierölkanaleinrichtung zumindest einen ringförmigen Kanalabschnitt auf, der sich in Umfangsrichtung des Kurbellagerelementes erstreckt.

In bevorzugter Weise ist der ringförmige Kanalabschnitt nutförmig in der inneren Umfangsfläche des äußeren zylinderförmigen Hülsenelements des Kurbellagerelementes und/oder in der äußeren Umfangsfläche des inneren zylinderförmigen Elements des Kurbellagerelementes ausgebildet.

In einer bevorzugten Ausführung weist die Schmierölkanaleinrichtung des Kurbellagerelementes zumindest einen radialen Kanalabschnitt auf, der sich in radialer Richtung des Kurbellagerelementes bis zu einer äußeren Umfangsfläche des äußeren zylinderförmigen Hülsenelementes erstreckt.

Gemäß einer bevorzugten Weiterbildung der Kurbelwelle weist das Hublagerelement ein inneres zylinderförmiges Element und ein äußeres zylinderförmiges Hülsenelement auf, wobei eine innere Umfangsfläche des äußeren zylinderförmigen Hülsenelementes auf einer äußeren Umfangsfläche des inneren zylinderförmigen Elementes gelagert ist.

In bevorzugter Weise ist das innere zylinderförmige Element des Hublagerelementes als inneres zylinderförmiges Hülsenelement ausgebildet.

In einer bevorzugten Ausführung weist das äußere zylinderförmige Hülsenelement des Hublagerelementes eine Beschichtung, insbesondere aus Keramik, auf.

Gemäß einer weiteren bevorzugten Weiterbildung ist das äußere zylinderförmige Hülsenelement des Hublagerelementes aus Keramik gebildet.

Gemäß einer bevorzugten Weiterbildung weist das äußere zylinderförmige Hülsenelement des Hublagerelementes und/oder das innere zylinderförmige Element des Hublagerelementes eine Schmierölkanaleinrichtung auf.

In einer bevorzugten Ausführung weist die Schmierölkanaleinrichtung des Hublagerelementes zumindest einen axialen Kanalabschnitt auf, der sich in axialer Richtung des Hublagerelementes erstreckt.

In bevorzugter Weise ist der axiale Kanalabschnitt nutförmig in der inneren Umfangsfläche des äußeren zylinderförmigen Hülsenelements des Hublagerelementes und/oder in der äußeren Umfangsfläche des inneren zylinderförmigen Elements des Hublagerelementes ausgebildet.

In einer bevorzugten Ausführung weist die Schmierölkanaleinrichtung zumindest einen ringförmigen Kanalabschnitt auf, der sich in Umfangsrichtung des Hublagerelementes erstreckt.

In bevorzugter Weise ist der ringförmige Kanalabschnitt nutförmig in der inneren Umfangsfläche des äußeren zylinderförmigen Hülsenelements des Hublagerelementes und/oder in der äußeren Umfangsfläche des inneren zylinderförmigen Elements des Hublagerelementes ausgebildet.

In einer bevorzugten Ausführung weist die Schmierölkanaleinrichtung des Hublagerelementes zumindest einen radialen Kanalabschnitt auf, der sich in radialer Richtung des Hublagerelementes bis zu einer äußeren Umfangsfläche des äußeren zylinderförmigen Hülsenelementes erstreckt.

Gemäß einer bevorzugten Weiterbildung der Kurbelwelle ist ein äußerer Umfangsflächenabschnitt eines Endabschnittes des Kurbellagerelementes in der Kurbellageröffnung der Kurbelwange aufgenommen, ein äußerer Umfangsflächenabschnitt eines Endabschnittes des Hublagerelementes ist in der Hublageröffnung der Kurbelwange aufgenommen, wobei eine Schmierölverbindungskanaleinrichtung vorgesehen ist, die eine Schmierölkanaleinrichtung des Kurbellagerelementes mit einer Schmierölkanaleinrichtung des Hublagerelementes verbindet.

In einer bevorzugten Ausführung weist die Schmierölverbindungskanaleinrichtung einen ringförmigen Kanalabschnitt in der Kurbelwange im Bereich der Kurbellageröffnung und/oder im Bereich des Endabschnittes des Kurbellagerelementes auf, und einen ringförmigen Kanalabschnitt in der Kurbelwange im Bereich der Hublageröffnung und/oder im Bereich des Endabschnittes des Hublagerelementes auf, wobei die ringförmigen Kanalabschnitte miteinander verbunden sind.

In bevorzugter Weise ist der ringförmige Kanalabschnitt in der Kurbelwange im Bereich der Kurbellageröffnung und/oder im Bereich des Endabschnittes des Kurbellagerelementes nutförmig in einer inneren Umfangsfläche der Kurbellageröffnung und/oder einer äußeren Umfangsfläche des Endabschnittes des Kurbellagerelementes ausgebildet.

In bevorzugter Weise ist der ringförmige Kanalabschnitt in der Kurbelwange im Bereich der Hublageröffnung und/oder im Bereich des Endabschnittes des Hublagerelementes nutförmig in einer inneren Umfangsfläche der Hublageröffnung und/oder einer äußeren Umfangsfläche des Endabschnittes des Hublagerelementes ausgebildet.

Gemäß einer bevorzugten Weiterbildung der Kurbelwelle ist die Kurbelwange im Wesentlichen plattenförmig, insbesondere mit gleichmäßiger Dicke in axialer Richtung der Kurbelwelle ausgebildet ist.

Gemäß einem bevorzugten Ausführungsbeispiel weist die Kurbelwange ein erstes und ein zweites plattenförmiges Kurbelwangenelement auf, die sich im Wesentlichen parallel zueinander erstrecken und mit gegenüberliegenden Seitenflächen in Anlage zueinander sind.

In einer bevorzugten Ausführung weist das erste Kurbelwangenelement die Hublageröffnung auf und das zweite Kurbelwangenelement die Kurbellageröffnung auf.

Gemäß einem bevorzugten Ausführungsbeispiel weisen das erste und das zweite Kurbelwangenelement jeweils gleiche Umfangskonturenflächen auf.

Gemäß einem bevorzugten Ausführungsbeispiel sind das erste und das zweite Kurbelwangenelement jeweils im Bereich der Umfangskonturenflächen miteinander verbunden, insbesondere verschweißt.

Gemäß einer bevorzugten Weiterbildung der Kurbelwelle ist eine Schmierölverbindungskanaleinrichtung in dem ersten und/oder zweiten plattenförmigen Kurbelwangenelement vorgesehen, die eine Schmierölkanaleinrichtung des Kurbellagerelementes mit einer Schmierölkanaleinrichtung des Hublagerelementes verbindet, wobei die Schmierölverbindungskanaleinrichtung Ausnehmungen in den gegenüberliegenden Seitenflächen des ersten und/oder zweiten plattenförmigen Kurbelwangenelements aufweist.

Gemäß einem ersten Verfahrensaspekt wird die genannte Aufgabe erfindungsgemäß gelöst durch ein Verfahren zur Montage einer Kurbelwelle mit den Merkmalen des Patentanspruches 31.

Gemäß einer bevorzugten Weiterbildung wird bei der Montage einer Kurbellagermontageeinheit auf eine Hublagermontageeinheit das Hublagerelement der Hublagermontageeinheit in einer Hublageröffnung der Kurbelwange der Kurbellagermontageeinheit befestigt, und bei der Montage einer Hublagermontageeinheit auf eine Kurbellagermontageeinheit das Kurbellagerelement der Kurbellagermontageeinheit in einer Kurbellageröffnung der Kurbelwange der Hublagermontageeinheit befestigt.

In bevorzugter Weise wird ein einteiliges Pleuel auf das Hublagerelement aufgesetzt.

Gemäß einem weiteren Verfahrensaspekt wird die genannte Aufgabe erfindungsgemäß gelöst durch ein Verfahren zur Montage einer Kurbelwelle gemäß dem Patentanspruch 34.

Gemäß einer bevorzugten Weiterbildung weist die Hublagermontageeinheit zwei erste plattenförmige Kurbelwangenelemente auf, die an Endabschnitten des Hublagerelementes befestigt sind und/oder die Kurbellagermontageeinheit zwei zweite plattenförmige Kurbelwangenelemente auf, die an Endabschnitten des Kurbellagerelementes befestigt sind.

In bevorzugter Weise werden das erstes und das zweite plattenförmige Kurbelwangenelement durch verschweißen an deren Außenkontur zusammengefügt.

In einer bevorzugten Ausführung weist die Hublagermontageeinheit ein einteiliges Pleuel auf.

Nachfolgend wird die vorliegende Erfindung durch Ausführungsbeispiele in Verbindung mit den beigefügten Zeichnungen näher beschrieben und erläutert. In den Zeichnungen zeigen:
- Fig. 1A und 1B: ein erstes Ausführungsbeispiel einer gebauten Kurbelwelle für eine Kolbenhubmaschine,
- Fig. 2: die einzelnen Teile der gebauten Kurbelwelle für eine Kolbenhubmaschine gemäß dem erste Ausführungsbeispiel,
- Fig. 3: eine Kurbelwange der gebauten Kurbelwelle gemäß eines zweiten Ausführungsbeispiels,
- Fig. 4: Teile der Kurbelwange der gebauten Kurbelwelle gemäß des zweiten Ausführungsbeispiels,
- Fig. 5: eine gebauten Kurbelwelle gemäß des zweiten Ausführungsbeispiels,
- Fig. 6: eine Montagefolge der gebauten Kurbelwelle.

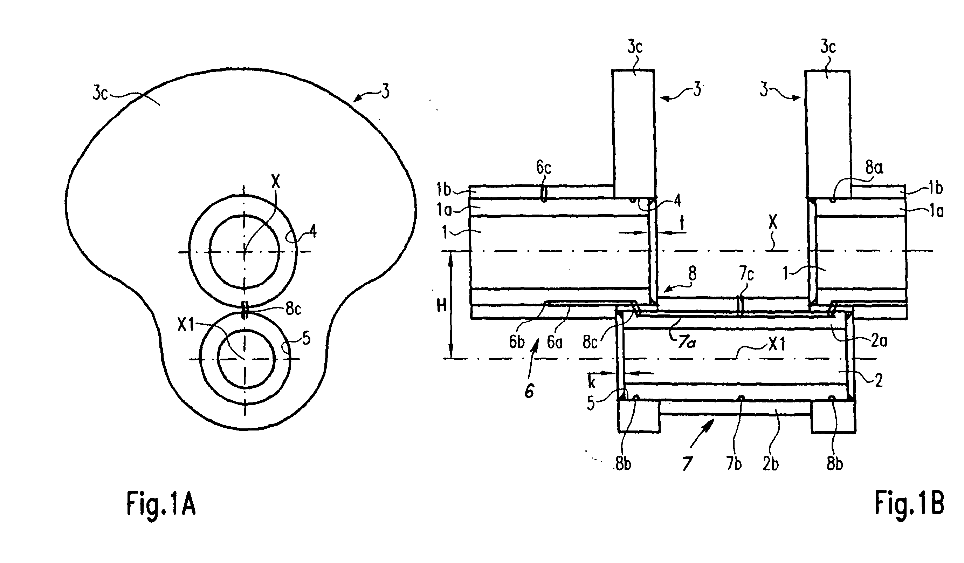

Fig. 1A und 1B zeigen ein erstes Ausführungsbeispiel einer gebauten Kurbelwelle für eine Kolbenhubmaschine. Die Fig. 1A zeigt die Seitenansicht einer Kurbelwange 3 in Richtung der Drehachse X der Kurbelwelle. Die Fig. 1B zeigt eine Schnittansicht entlang der Drehachse X eines Endabschnittes der Kurbelwelle.

Die Kurbelwelle gemäß dem ersten Ausführungsbeispiel weist eine Mehrzahl von Kurbellagerelementen 1 (in Fig. 1B ist das linke Kurbellagerelement vollständig und das rechte Kurbellagerelement teilweise gezeigt) zur Lagerung der Kurbelwelle auf. Die Kurbellagerelemente 1 der Kurbelwelle werden in Lagern eines Kurbelgehäuses (nicht gezeigt) der Kolbenhubmaschine gelagert. Die Kurbellagerelemente 1 sind zylinderförmig ausgebildet und erstrecken sich symmetrisch zu der Drehachse X der Kurbelwelle. Weiterhin weist die Kurbelwelle eine Mehrzahl von Hublagerelementen 2 (ein einziges Hublagerelement ist in Fig. 1B gezeigt) zur Lagerung von Pleuelstangen (nicht gezeigt) der Kolbenhubmaschine auf. Entsprechend der verschiedenen Varianten der Kolbenhubmaschine kann jedes Hublagerelement eine einzige Pleuelstange oder zwei Pleuelstangen lagern. Die Hublagerelemente 2 sind zylinderförmig ausgebildet und erstrecken sich parallel zu der Drehachse X der Kurbelwelle. Eine Mittelachse X1 des Hublagerelementes 2 ist um den Hub(-Betrag) der Kurbelwelle von der Drehachse X der Kurbelwelle versetzt.

Die Fig. 1A und 1B zeigen weiterhin die Kurbelwangen 3 (zwei in Fig. 1B gezeigt) der Kurbelwelle. Die Kurbelwange 3 verbindet das Kurbellagerelement 1 mit dem Hublagerelement 2. Wie in Fig. 1B gezeigt ist das Hublagerelement 2 mit den zwei gezeigten Kurbelwangen 3 verbunden. Weiterhin ist jede, der gezeigten Kurbelwangen 3 jeweils mit einem Kurbellagerelement 1 verbunden.

Die Kurbelwangen 3 gemäß dem ersten Ausführungsbeispiel sind plattenförmig ausgebildet. Jede der Kurbelwangen 3 weist eine Kurbellageröffnung 4 und eine Hublageröffnung 5 auf. Die Kurbellageröffnung 4 nimmt das Kurbellagerelement 1 auf und ist konzentrisch zu der Drehachse X der Kurbelwelle ausgebildet. Die Hublageröffnung 5 der Kurbelwange 3 nimmt das Hublagerelement 2 auf und ist konzentrisch zu der Mittelachse X1 dieses Hublagerelementes 2 ausgebildet ist. Das Kurbellagerelement 1 ist in der Kurbellageröffnung 4 der Kurbelwange 3 befestigt. Das Hublagerelement 2 ist in der Hublageröffnung 5 der Kurbelwange 3 befestigt. Weiterhin weist jede der Kurbelwangen 3 einen Ausgleichsabschnitt 3c, wie in Fig. 1A und 1B gezeigt, auf. Dieser Ausgleichsabschnitt 3c dient zum Massenausgleich des Hublagerelementes 2 und der daran gelagerten Elemente (Pleuel und Kolben, nicht gezeigt) der Kolbenhubmaschine.

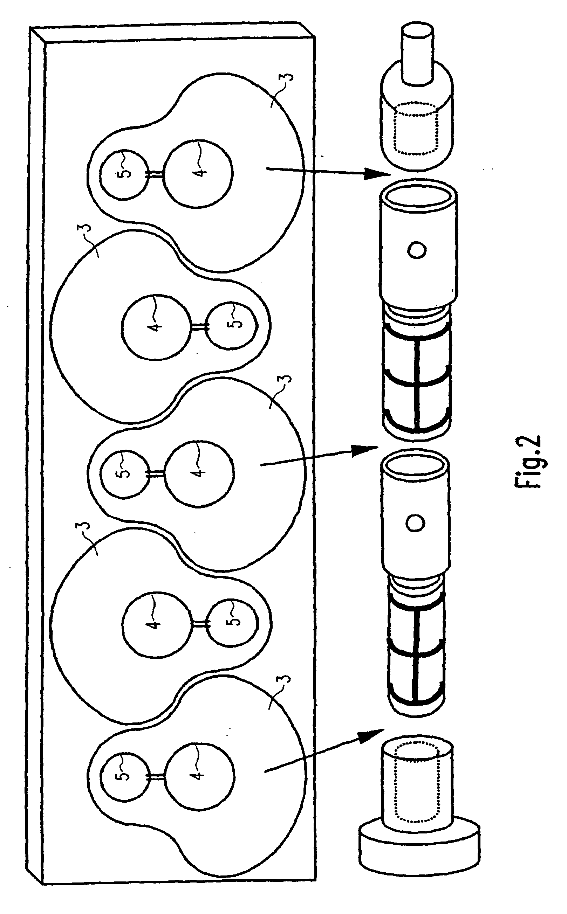

Fig. 2 zeigt die einzelnen Teile der gebauten Kurbelwelle für eine Kolbenhubmaschine gemäß dem ersten Ausführungsbeispiel. Die Kurbelwangen 3 werden aus einer Platte mit optimierter Dicke herausgeschnitten. Dadurch lassen sich auf einfache Weise Kurbelwangen schaffen, die hinsichtlich ihrer Masse (Ausgleichsgewicht) und ihrer Festigkeit optimiert sind. Die Kurbellagerelemente 1 und Hublagerelement 2 sind im Wesentlichen aus einfachen Zylinderteilen aufgebaut. Diese Zylinderteile sind in einfacher Weise aus rohrförmigen Teilen gebildet, wobei sowohl Festigkeit als auch Gewicht der Teile optimiert ist.

Die rohrförmige Gestaltung der Kurbellagerelemente 1 und der Hublagerelemente 2 erlaubt ein hohes Widerstandsmoment gegen Biegung und Torsion dieser Elemente bei relativ geringem Gewicht. Die Kurbellagerelemente 1 und die Hublagerelemente 2 sind in den jeweiligen Öffnungen 4 und 5 der Kurbelwange 3 z.B. durch Verpressen und/oder Verschweißen, insbesondere Laserverschweißen, befestigt.

Die Gestaltung der Kurbelwangen 3 sowie die Gestaltung der Kurbellagerelemente 1 und der Hublagerelemente 2 wird nicht durch die Einschränkungen bestimmt, wie sie bei einem Schmiede- oder Gießvorgang bestehen. Bei der gebauten Kurbelwelle gemäß dem ersten Ausführungsbeispiel können Einzelteile zum Einsatz kommen, die in einfacher Weise durch Automaten spanend hergestellt werden können, ohne daß kostspielige Schmiede- oder Gießformen verwendet werden müssen.

Bei der gebauten Kurbelwelle gemäß dem ersten Ausführungsbeispiel können die Kurbelwangen 3, die Kurbellagerelemente 1 und die Hublagerelemente 2 jeweils als Gleichteile für verschiedene Kurbelwellen verwendet werden. Beispielsweise können ein Hublagerelement, zwei identische Kurbelwangen und zwei Kurbellagerelemente, die als Endlager ausgebildet sind, zu einer Ein-Zylinder-Kurbelwelle zusammengebaut werden. In gleicher Weise können aber auch drei Hublagerelemente, vier Kurbellagerelemente und sechs Kurbelwangen zu einer Drei-Zylinder-Kurbelwelle zusammengebaut werden. In entsprechender Weise können so Kurbelwellen für unterschiedliche Zylinderzahlen hergestellt werden, wobei gleiche Teile für die unterschiedlichen Kurbelwellen verwendet werden. Die gebaute Kurbelwelle gemäß dem ersten Ausführungsbeispiel ist somit als montierfähiges modulares Baukastensystem konzipiert. Ein weiterer Vorteil dieses modularen Aufbaus ist die Verwendung unterschiedlicher Werkstoffe für die einzelnen Teile der Kurbelwelle sowie die Möglichkeit einer unterschiedlichen Wärmebehandlung der Teile für die Kurbelwelle.

Wie in den Fig. 1A, 1B und 2 gezeigt, ist die gebaute Kurbelwelle für eine Kolbenhubmaschine gemäß dem erstes Ausführungsbeispiel aus einfachen platten- bzw. zylinderförmigen Teilen aufgebaut. Die gebaute Kurbelwelle für eine Kolbenhubmaschine ist modular aufgebaut, wobei die Kurbelwelle in einfacher Weise herstellbar und mit hoher Flexibilität insbesondere bezüglich der Anzahl der Pleuelstangen bzw. der Zylinder modifizierbar ist.

Wie insbesondere in Fig. 1B gezeigt, besteht das Kurbellagerelement 1 gemäß dem ersten Ausführungsbeispiel aus einem inneren zylinderförmigen Element 1a und einem äußeren zylinderförmigen Hülsenelement 1b. Gemäß dem Ausführungsbeispiel ist das innere Element als inneres zylinderförmiges Hülsenelement 1a ausgebildet. Das innere zylinderförmige Hülsenelement 1a und das äußere zylinderförmige Hülsenelement 1b sind ineinander gesteckt derart, daß eine innere Umfangsfläche des äußeren zylinderförmigen Hülsenelementes 1b auf einer äußeren Umfangsfläche des inneren zylinderförmigen Hülsenelements 1a gelagert ist.

Diese Buchsen-Anordnung für das Kurbellagerelement 1 erlaubt in einfacher Weise, verschiedene Werkstoffe miteinander zu kombinieren. Dabei ist die äußere Umfangsfläche des äußeren zylinderförmigen Hülsenelementes 1b hinsichtlich der Lagerung in dem Kurbelgehäuse optimiert. Beispielsweise kommt hier eine Stahlhülse mit gehärteter Oberfläche zum Einsatz. Alternativ dazu kann die äußere Umfangsoberfläche des äußeren zylinderförmigen Hülsenelementes eine Beschichtung wie beispielsweise eine Keramikbeschichtung aufweisen. Das innere zylinderförmige Hülsenelement ist hinsichtlich der Aufnahme der Biege- und Torsionsbelastungen der Kurbelwelle optimiert. Dabei kommen Stähle mit entsprechender Zähigkeit zum Einsatz.

Alternativ zu einer äußeren zylindrischen Stahlhülse kann auch eine äußere zylindrische Keramikhülse als Hülsenelement 1b verwendet werden.

Wie in Fig. 1B gezeigt, ist das innere Hülsenelement 1a des Kurbellagerelementes 1 in die kreisförmige Kurbellageröffnung 4 der Kurbelwange 3 eingesetzt. Dabei ist ein axialer Endabschnitt der äußeren Umfangsfläche des inneren Hülsenelementes 1a in Kontakt mit der kreisförmigen Umfangsfläche der Kurbellageröffnung 4. Das äußere zylinderförmige Hülsenelement 1b des Kurbellagerelementes 1 ist auf der übrigen äußeren Umfangsfläche (die nicht in der Kurbellageröffnung 4 aufgenommen ist) des inneren Hülsenelementes 1a gelagert, wobei eine axiale Stirnfläche des äußeren zylinderförmigen Hülsenelementes 1b in Anlage mit einer Seitenfläche der Kurbelwange 3 ist.

Das innere zylinderförmige Hülsenelement 1a ist durch Verpressen und/oder Verschweißen mit der Kurbelwange 3 verbunden. Gemäß dem gezeigten Ausführungsbeispiel wird das innere zylinderförmige Hülsenelement 1a in die Kurbellageröffnung 4 eingesetzt, wobei ein Abstand t zwischen der Stirnfläche des inneren zylinderförmigen Hülsenelementes 1a und der benachbarten Seitenfläche der Kurbelwange 3 verbleibt. Dieser Abstand t (in axialer Richtung der Drehachse X der Kurbelwelle) schafft einen Raum, in dem das innere zylinderförmige Hülsenelement 1a umlaufend oder abschnittsweise mit der Kurbelwange 3 verschweißt werden kann, wie dies in Fig. 1B gezeigt ist, wobei kein Vorsprung (Schweißnaht) an der Seitenfläche der Kurbelwange 3 gebildet wird. Wie in Fig. 1B gezeigt, ist das nächste Kurbellagerelement 1 in entsprechender Weise ausgebildet und in die entsprechende Kurbelwange 3 eingesetzt, wobei die gegenüberliegenden Seitenflächen der Kurbelwange 3 keine Vorsprünge oder dgl. aufweisen, so daß eine Pleuelstange (nicht gezeigt) zwischen diesen Seitenflächen aufgenommen werden kann. Durch den Abstand t ist es nicht notwendig, bei einer umlaufenden Verschweißung des inneren zylinderförmigen Hülsenelementes 1a eine Nachbearbeitung der entsprechenden Seitenfläche der Kurbelwange 3 vorzusehen.

Die linke Seite der Fig. 1B zeigt ein Kurbellagerelement, das als Endlager an einem Endabschnitt der Kurbelwelle vorgesehen ist. Bei diesem Endlager sind die endseitigen Stirnflächen des äußeren und inneren zylinderförmigen Hülsenelementes 1a, 1b am Ende der Kurbelwelle (bezüglich der axialen Länge) bündig ausgebildet. Bei einem Kurbellagerelement 1, das in einem mittleren Abschnitt der Kurbelwelle angeordnet ist und zwei Kurbelwangen miteinander verbindet, ist das äußere zylinderförmige Hülsenelement 1b an beiden Endabschnitten in axial zurückgesetzter Form ausgebildet, so daß die beiden gegenüberliegenden Stirnflächen des äußeren zylinderförmige Hülsenelementes 1b in Anlage mit den gegenüberliegenden Seitenflächen der gegenüberliegenden Kurbelwangen 3 kommen und die äußere Umfangsfläche an beiden Endabschnitten des inneren zylinderförmigen Hülsenelementes 1a in den jeweiligen Kurbellageröffnungen 4 der Kurbelwangen 3 aufgenommen sind.

Das Kurbellagerelement 1 der Kurbelwelle gemäß dem ersten Ausführungsbeispiel weist eine Schmierölkanaleinrichtung 6 auf. Diese Schmierölkanaleinrichtung 6 dient zur Zuführung von Schmieröl zu der äußeren Umfangsfläche des äußeren zylindrischen Hülsenelementes 1b, das in dem Kurbelgehäuse der Kolbenhubmaschine gelagert ist. Diese Schmierölkanaleinrichtung 6 ist im Wesentlichen zwischen dem äußeren zylinderförmigen Hülsenelement 1b und dem inneren zylinderförmigen Hülsenelement 1a angeordnet. Das Ausführungsbeispiel gemäß Fig. 1B zeigt im Wesentlichen eine Kanalanordnung in der äußeren Umfangsfläche des inneren zylinderförmigen Hülsenelementes 1a, wie dies nachfolgend noch im Detail erläutert wird. Alternativ zu der gezeigten Schmierölkanaleinrichtung können die Kanäle auch in der inneren Umfangsfläche des äußeren Hülsenelementes oder als Teilkanäle in beiden gegenüberliegenden Umfangsflächen des inneren und des äußeren zylinderförmigen Hülsenelementes 1a, 1 b ausgebildet sein.

Das erste Ausführungsbeispiel zeigt einen axialen Kanalabschnitt 6a, der sich in axialer Richtung des Kurbellagerelementes 1 erstreckt. Dieser axiale Kanalabschnitt 6a ist nutförmig in der äußeren Umfangsfläche des inneren zylinderförmigen Hülsenelementes 1a ausgebildet. Weiterhin ist bei der Schmierölkanaleinrichtung 6 ein mittiger ringförmiger Kanalabschnitt 6b vorgesehen, der sich in Umfangsrichtung des Kurbellagerelementes 1 erstreckt. Dieser ringförmige Kanalabschnitt 6b ist nutförmig in der äußeren Umfangsfläche des inneren zylinderförmigen Hülsenelementes 1a ausgebildet und steht mit dem axialen Kanalabschnitt 6a in Fluidverbindung. Weiterhin ist ein radialer Kanalabschnitt 6c vorgesehen, der sich in radialer Richtung des Kurbellagerelementes 1 bis zu der äußeren Umfangsfläche des äußeren zylinderförmigen Hülsenelementes 1b erstreckt. Dieser radiale Kanalabschnitt 6c ist mit dem ringförmigen Kanalabschnitt 6b in Fluidverbindung.

Diese Schmierölkanaleinrichtung 6 wird mit unter Druck stehendem Schmieröl über eine Druckölversorgung (nicht gezeigt) mit Schmieröl versorgt.

In dem Ausführungsbeispiel ist ein einziger axialer Kanalabschnitt 6a, ein einziger mittiger ringförmiger Kanalabschnitt 6b, und ein einziger radialer Kanalabschnitt 6c gezeigt. Alternativ dazu können mehrere axiale Kanalabschnitte mit einem oder mehreren ringförmigen Kanalabschnitten in Verbindung stehen. Weiterhin können mehrere radiale Kanalabschnitte in Verbindung mit einem oder mehreren ringförmigen Kanalabschnitten vorgesehen sein.

Bei der Darstellung gemäß Fig. 1B ist auf der linken Seite ein Kurbellagerelement 1 gezeigt, das ein Endlager der Kurbelwelle bildet. Dabei erstreckt sich der axiale Kanalabschnitt 6a bis zu dem ringförmigen Kanalabschnitt 6b im Mittelabschnitt des Kurbellagerelementes 1. Bei einem Kurbellagerelement 1 in einem mittleren Abschnitt der Kurbelwelle erstreckt sich der axiale Kanalabschnitt 6a über den in der Mitte liegenden ringförmigen Kanalabschnitt 6b hinaus bis zu der nächsten Kurbelwange. Die Schmieröleinrichtungen 6 der Kurbellagerelemente 1 sind mit Schmieröleinrichtungen der Hublagerelemente 2 im Bereich der Kurbelwangen 3 verbunden, wie dies nachfolgend noch erläutert wird.

Wie weiterhin in Fig. 1B gezeigt, besteht das Hublagerelement 2 gemäß dem ersten Ausführungsbeispiel aus einem inneren zylinderförmigen Element 2a und einem äußeren zylinderförmigen Hülsenelement 2b. Gemäß dem Ausführungsbeispiel ist das innere Element als inneres zylinderförmiges Hülsenelement 2a ausgebildet. Das innere zylinderförmige Hülsenelement 2a und das äußere zylinderförmige Hülsenelement 2b sind ineinander gesteckt derart, daß eine innere Umfangsfläche des äußeren zylinderförmigen Hülsenelementes 2b auf einer äußeren Umfangsfläche des inneren zylinderförmigen Hülsenelements 2a gelagert ist.

Diese Buchsen-Anordnung für das Hublagerelement 2 erlaubt, ähnlich wie bei dem Kurbellagerelement 1, in einfacher Weise, verschiedene Werkstoffe miteinander zu kombinieren. Dabei ist die äußere Umfangsfläche des äußeren zylinderförmigen Hülsenelementes 2b hinsichtlich der Lagerung des Pleuels optimiert. Beispielsweise kommt hier eine Stahlhülse mit gehärteter Oberfläche zum Einsatz. Alternativ dazu kann die äußere Umfangsoberfläche des äußeren zylinderförmigen Hülsenelementes eine Beschichtung wie beispielsweise eine Keramikbeschichtung aufweisen. Das innere zylinderförmige Hülsenelement ist hinsichtlich der Aufnahme der Biege- und Torsionsbelastungen der Kurbelwelle optimiert. Dabei kommen Stähle mit entsprechender Zähigkeit zum Einsatz.

Alternativ zu einer äußeren zylindrischen Stahlhülse kann auch eine äußere zylindrische Keramikhülse als Hülsenelement 2b verwendet werden.

Wie in Fig. 1B gezeigt, ist das innere Hülsenelement 2a des Hublagerelementes 2 in die kreisförmige Hublageröffnung 5 der Kurbelwange 3 eingesetzt. Dabei ist ein axialer Endabschnitt der äußeren Umfangsfläche des inneren Hülsenelementes 2a in Kontakt mit der kreisförmigen Umfangsfläche der Hublageröffnung 5. Das äußere zylinderförmige Hülsenelement 2b des Hublagerelementes 2 ist auf der übrigen äußeren Umfangsfläche (die nicht in der Hublageröffnung 5 aufgenommen ist) des inneren Hülsenelementes 2a gelagert, wobei eine axiale Stirnfläche des äußeren zylinderförmigen Hülsenelementes 2b in Anlage mit einer Seitenfläche der Kurbelwange 3 ist.

Das innere zylinderförmige Hülsenelement 2a ist durch Verpressen und/oder Verschweißen mit der Kurbelwange 3 verbunden. Gemäß dem gezeigten Ausführungsbeispiel wird das innere zylinderförmige Hülsenelement 2a in die Hublageröffnung 5 eingesetzt, wobei ein Abstand k zwischen der Stirnfläche des inneren zylinderförmigen Hülsenelementes 2a und der benachbarten Seitenfläche der Kurbelwange 3 verbleibt. Dieser Abstand k (in axialer Richtung der Drehachse X der Kurbelwelle) schafft einen Raum, in dem das innere zylinderförmige Hülsenelement 2a umlaufend oder abschnittsweise mit der Kurbelwange 3 verschweißt werden kann, wie dies in Fig. 1B gezeigt ist, wobei kein Vorsprung (Schweißnaht) an der Seitenfläche der Kurbelwange 3 gebildet wird. Wie in Fig. 1B gezeigt, ist die nächste Kurbelwange 3 in entsprechender Weise mit dem Hublagerelement 2 verbunden. Die Seitenflächen der Kurbelwangen 3 weisen durch die Verschweißung keine Vorsprünge oder dgl. auf (ähnlich der Verschweißung der Kurbellagerelemente), so daß die Kurbelwelle problemlos in dem Kurbelgehäuse gelagert werden kann. Durch den Abstand k ist es nicht notwendig, bei einer umlaufenden Verschweißung des inneren zylinderförmigen Hülsenelementes 2a eine Nachbearbeitung der entsprechenden Seitenfläche der Kurbelwange 3 vorzusehen.

Die Fig. 1B zeigt ein Hublagerelement 2, das in einem mittleren Abschnitt der Kurbelwelle angeordnet ist und zwei Kurbelwangen 3 miteinander verbindet. Das äußere zylinderförmige Hülsenelement 2b ist an beiden Endabschnitten in axial zurückgesetzter Form ausgebildet, so daß die beiden gegenüberliegenden Stirnflächen des äußeren zylinderförmige Hülsenelementes 2b in Anlage mit den gegenüberliegenden Seitenflächen der gegenüberliegenden Kurbelwangen 3 kommen und die äußere Umfangsfläche an beiden Endabschnitten des inneren zylinderförmigen Hülsenelementes 2a in den jeweiligen Hublageröffnungen 5 der Kurbelwangen 3 aufgenommen sind.

Das Hublagerelement 2 der Kurbelwelle gemäß dem ersten Ausführungsbeispiel weist eine Schmierölkanaleinrichtung 7 auf. Diese Schmierölkanaleinrichtung 7 dient zur Zuführung von Schmieröl zu der äußeren Umfangsfläche des äußeren zylindrischen Hülsenelementes 2b, das eine Pleuelstange der Kolbenhubmaschine lagert. Diese Schmierölkanaleinrichtung 7 ist im wesentlichen zwischen dem äußeren zylinderförmigen Hülsenelement 2b und dem inneren zylinderförmigen Hülsenelement 2a angeordnet. Das Ausführungsbeispiel gemäß Fig. 1B zeigt im wesentlichen eine Kanalanordnung in der äußeren Umfangsfläche des inneren zylinderförmigen Hülsenelementes 2a, wie dies nachfolgend noch im Detail erläutert wird. Alternativ zu der gezeigten Schmierölkanaleinrichtung können die Kanäle auch in der inneren Umfangsfläche des äußeren Hülsenelementes oder als Teilkanäle in beiden gegenüberliegenden Umfangsflächen des inneren und des äußeren zylinderförmigen Hülsenelementes 2a, 2b ausgebildet sein.

Das erste Ausführungsbeispiel zeigt einen axialen Kanalabschnitt 7a, der sich in axialer Richtung des Hublagerelementes 2 von einem Endabschnitt zu einem gegenüberliegenden Endabschnitt des Hublagerelementes 2 erstreckt. Dieser axiale Kanalabschnitt 7a ist nutförmig in der äußeren Umfangsfläche des inneren zylinderförmigen Hülsenelementes 2a ausgebildet. Weiterhin ist bei der Schmierölkanaleinrichtung 7 ein mittiger ringförmiger Kanalabschnitt 7b vorgesehen, der sich in Umfangsrichtung des Hublagerelementes 2 erstreckt. Dieser ringförmige Kanalabschnitt 7b ist nutförmig in der äußeren Umfangsfläche des inneren zylinderförmigen Hülsenelementes 2a ausgebildet und steht mit dem axialen Kanalabschnitt 7a in Fluidverbindung. Weiterhin ist ein radialer Kanalabschnitt 7c vorgesehen, der sich in radialer Richtung des Hublagerelementes 2 bis zu der äußeren Umfangsfläche des äußeren zylinderförmigen Hülsenelementes 2b erstreckt. Dieser radiale Kanalabschnitt 7c ist mit dem ringförmigen Kanalabschnitt 7b in Fluidverbindung.

In dem Ausführungsbeispiel ist ein einziger axialer Kanalabschnitt 7a, ein einziger mittiger ringförmiger Kanalabschnitt 7b, und ein einziger radialer Kanalabschnitt 7c gezeigt. Alternativ dazu können mehrere axiale Kanalabschnitte mit einem oder mehreren ringförmigen Kanalabschnitten in Verbindung stehen. Weiterhin können mehrere radiale Kanalabschnitte in Verbindung mit einem oder mehreren ringförmigen Kanalabschnitten vorgesehen sein.

Die Schmierölkanaleinrichtung 6 des Kurbellagerelementes 1 ist mit der Schmierölkanaleinrichtung 7 des Hublagerelementes 2 verbunden. Die Schmierölversorgung der Schmierölkanaleinrichtung 7 des Hublagerelementes 2 erfolgt über diese Verbindung durch die Schmierölkanaleinrichtung 6 des Kurbellagerelementes 1.

Zur Verbindung der Schmierölkanaleinrichtungen 6 und 7 eine Schmierölkanalverbindungseinrichtung 8 vorgesehen. Diese Schmierölkanalverbindungseinrichtung 8 weist einen ringförmigen Kanalabschnitt 8a im Bereich des axialen Endabschnittes des Kurbellagerelementes 1 auf. Wie in Fig. 1 gezeigt, ist der ringförmige Kanalabschnitt 8a in dem Bereich ausgebildet, der durch die Kurbellageröffnung 4 der Kurbelwange 3 aufgenommen ist. Bei dem gezeigten Ausführungsbeispiel ist der ringförmige Kanalabschnitt 8a in der äußeren Umfangsfläche des inneren zylinderförmigen Hülsenelementes 1a des Kurbellagerelementes 1 ausgebildet. Alternativ dazu kann der ringförmige Kanalabschnitt in der Umfangsfläche der Kurbellageröffnung ausgebildet sein bzw. es können entsprechende ringförmige Kanalteilabschnitte sowohl auf dem Kurbellagerelement als auch in der Kurbellageröffnung ausgebildet sein. Weiterhin weist diese Schmierölkanalverbindungseinrichtung 8 einen ringförmigen Kanalabschnitt 8b im Bereich des axialen Endabschnittes des Hublagerelementes 2 auf. Wie in Fig. 1 gezeigt, ist der ringförmige Kanalabschnitt 8b in dem Bereich ausgebildet, der durch die Hublageröffnung 5 der Kurbelwange 3 aufgenommen ist. Bei dem gezeigten Ausführungsbeispiel ist der ringförmige Kanalabschnitt 8b in der äußeren Umfangsfläche des inneren zylinderförmigen Hülsenelementes 2a des Hublagerelementes 2 ausgebildet. Alternativ dazu kann der ringförmige Kanalabschnitt in der Umfangsfläche der Hublageröffnung ausgebildet sein bzw. es können entsprechende ringförmige Kanalteilabschnitte sowohl auf dem Hublagerelement als auch in der Hublageröffnung ausgebildet sein.

Der ringförmige Kanalabschnitt 8a im Bereich des Kurbellagerelementes 1 ist mit dem ringförmigen Kanalabschnitt 8b im Bereich des Hublagerelementes 2 verbunden. Dazu ist in der Kurbelwange ein radialer Kanalabschnitt 8c vorgesehen, der sich von der Kurbellageröffnung zu der Hublageröffnung erstreckt, wie dies in den Fig. 1A und 1 B gezeigt ist.

Das erste Ausführungsbeispiel der Kurbelwelle ist derart ausgebildet, daß der Hub H der Kurbelwelle größer ist als die Summe des Radius des Kurbellagerelementes 1 und des Radius des Hublagerelementes 2. Insbesondere ist, wie in der speziellen Ausführung der Fig. 1 gezeigt, der Hub H größer als die Summe des Radius der äußeren Umfangsfläche des inneren Hülsenelementes 1a des Kurbellagerelementes 1 und des Radius der äußeren Umfangsfläche des inneren Hülsenelementes 2a des Hublagerelementes 2. Bei dieser Gestaltung kann der radiale Kanalabschnitt 8c der Schmierölverbindungskanaleinrichtung 8 in der Kurbelwange 3 ausgebildet werden. Eine derartige Kurbelwelle wird auch als Langhubkurbelwelle bezeichnet. Bei dem gezeigten Ausführungsbeispiel kann der Hub der Kurbelwelle verkürzt werden, indem beispielsweise die Radien der Teile der Kurbellagerelemente und der Hublagerelemente reduziert wird.

Bei der Kurbelwelle gemäß dem ersten Ausführungsbeispiel sind sowohl die Kurbellagerelemente 1 als auch die Hublagerelemente 2 als Teile von hydrodynamischen Gleitlagern vorgesehen. Durch den modularen Aufbau der Kurbelwelle können anstelle der hydrodynamischen Gleitlager auch in einfacher Weise Wälzlager verwendet werden, indem entsprechende Lager vor der Endmontage der Kurbelwelle, insbesondere der Endmontage mit einteiligen Pleuelstangen über die Lagerelemente 1 und 2 gesteckt werden. Alternativ dazu können die äußeren zylinderförmigen Hülsenelemente 1b und 2b der Kurbellagerelemente 1 und der Hublagerelemente 2 als innere Laufringe entsprechender Wälzlager ausgebildet werden. Bei den Wälzlagern können insbesondere Rollen oder Nadellager zum Einsatz kommen. Ein Vorteil der Lagerung mit Wälzlagern ist beispielsweise die gute Notlaufeigenschaft bei Druckölverlust.

Die Kurbelwangen 3 gemäß dem ersten Ausführungsbeispiel sind im wesentlichen als plattenförmige Elemente mit gleichmäßiger Dicke bezüglich der Axialrichtung der Kurbelwelle ausgebildet. Bei dem ersten Ausführungsbeispiel ist jede Kurbelwange als einteiliges Element ausgebildet.

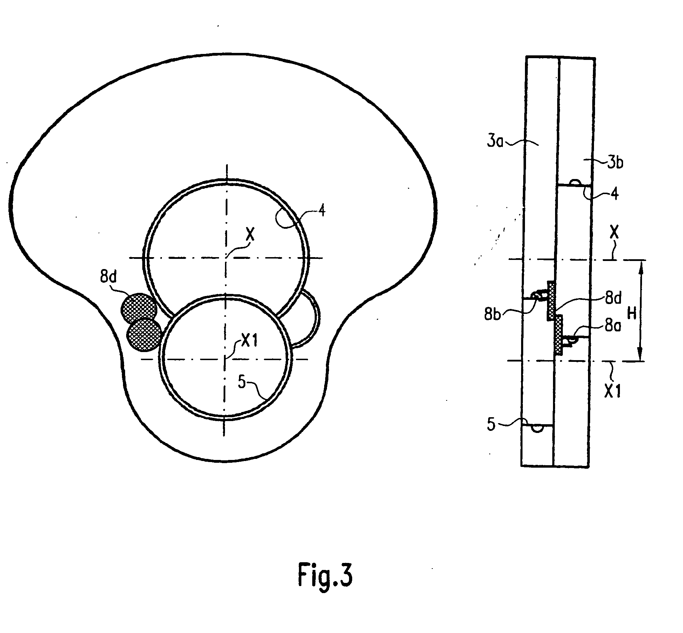

In den Fig. 3 bis 5 ist ein zweites Ausführungsbeispiel der gebauten Kurbelwelle gezeigt. Bei diesem zweiten Ausführungsbeispiel der Kurbelwelle ist jede Kurbelwange 3 durch ein erstes plattenförmiges Kurbelwangenelement 3a und ein zweites plattenförmiges Kurbelwangenelement 3b gebildet, wie dies in Fig. 3 gezeigt ist.

Das erste und das zweite plattenförmige Kurbelwangenelement 3a, 3b liegen mit axialen Endflächen aneinander und sind zu der Kurbelwange 3 verbunden. Die plattenförmigen Kurbelwangenelemente 3a, 3b erstrecken sich somit im Wesentlichen parallel zueinander. In dem in Fig. 3 gezeigten zweiten Ausführungsbeispiel weisen das erste und zweite plattenförmige Kurbelwangenelement 3a, 3b im Wesentlichen gleiche Außenkontur auf und sind mit gleicher Dicke ausgebildet.

Das erste Kurbelwangenelement 3a weist die Hublageröffnung 5 auf, um das Hublagerelement 2 aufzunehmen. Das zweite Kurbelwangenelement 3b weist die Kurbellageröffnung 4 auf, um das Kurbellagerelement 1 aufzunehmen. Die Ausgestaltung des Kurbellagerelementes 1 sowie des Hublagerelementes 2, insbesondere die Aufnahme in den Kurbel- bzw. Hublageröffnungen 4 und 5 und die Ausbildung der Schmierölkanaleinrichtungen 6 und 7 des zweiten Ausführungsbeispiels ist im wesentlichen identisch mit der des ersten Ausführungsbeispiels, das in Verbindung mit Fig. 1 und 2 beschrieben ist. Nachfolgend werden im Wesentlichen die Unterschiede des zweiten Ausführungsbeispiels zum ersten Ausführungsbeispiel erläutert.

Wie bereits erwähnt, ist bei dem zweiten Ausführungsbeispiel die Schmierölkanaleinrichtung 6 des Kurbellagerelementes 1 und die Schmierölkanaleinrichtung 7 des Hublagerelementes 2 gleich denen des ersten Ausführungsbeispiels ausgebildet. Bei dem zweiten Ausführungsbeispiel ist die Schmierölverbindungskanaleinrichtung 8, welche die Schmierölkanaleinrichtung 6 des Kurbellagerelementes 1 und die Schmierölkanaleinrichtung 7 des Hublagerelementes 2 verbindet, durch Ausnehmungen 8d ausgebildet, die in den gegenüberliegenden Seitenflächen des ersten und zweiten plattenförmigen Kurbelwangenelementes 3a, 3b ausgebildet sind. Gemäß dem gezeigten Ausführungsbeispiel ist eine kreisförmige Ausnehmung in dem ersten Kurbelwangenelement 3a ausgebildet, die mit einem ringförmigen Kanalabschnitt 8b, der in der Hublageröffnung 5 ausgebildet ist. Eine weitere kreisförmige Ausnehmung ist in der Seitenfläche des zweiten plattenförmigen Kurbelwangenelementes 3b ausgebildet, die mit einem ringförmigen Kanalabschnitt 8a verbunden ist, der in der Hublageröffnung 4 ausgebildet ist. Diese beiden kreisförmigen Ausnehmungen sind überlappend angeordnet, wie dies in Fig. 3 gezeigt ist, so daß die kreisförmigen Kanalabschnitte 8a und 8b in Fluidverbindung miteinander sind. Wie bereits in Verbindung mit dem ersten Ausführungsbeispiel erläutert, sind die ringförmigen Kanalabschnitte 8a und 8b jeweils in Verbindung mit der Schmierölkanaleinrichtung 6 des Kurbellagerelementes 1 und der Schmierölkanaleinrichtung 7 des Hublagerelementes 2.

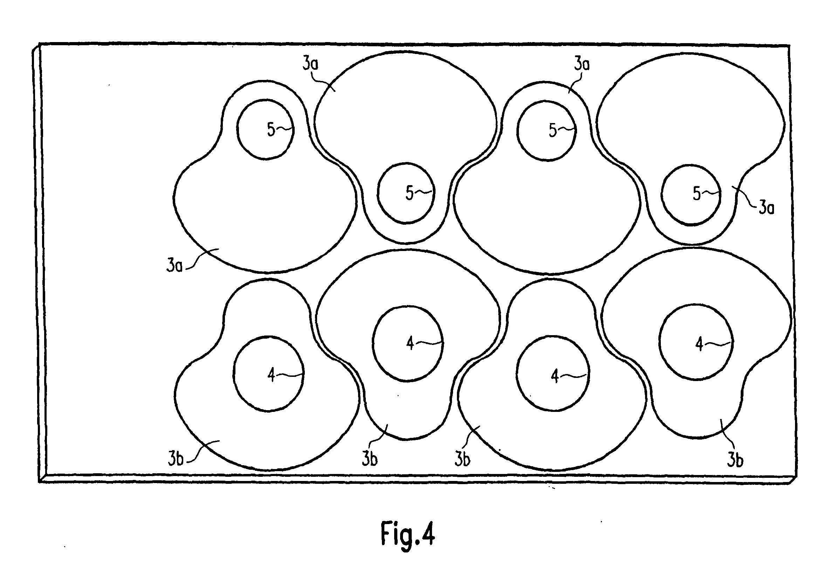

Das erste und zweite Kurbelwangenelement 3a, 3b wird in entsprechender Weise aus einer Platte, wie in Fig. 4 gezeigt, herausgeschnitten. Dadurch können die ersten und zweiten Kurbelwangenelemente in einfacher Weise hergestellt werden.

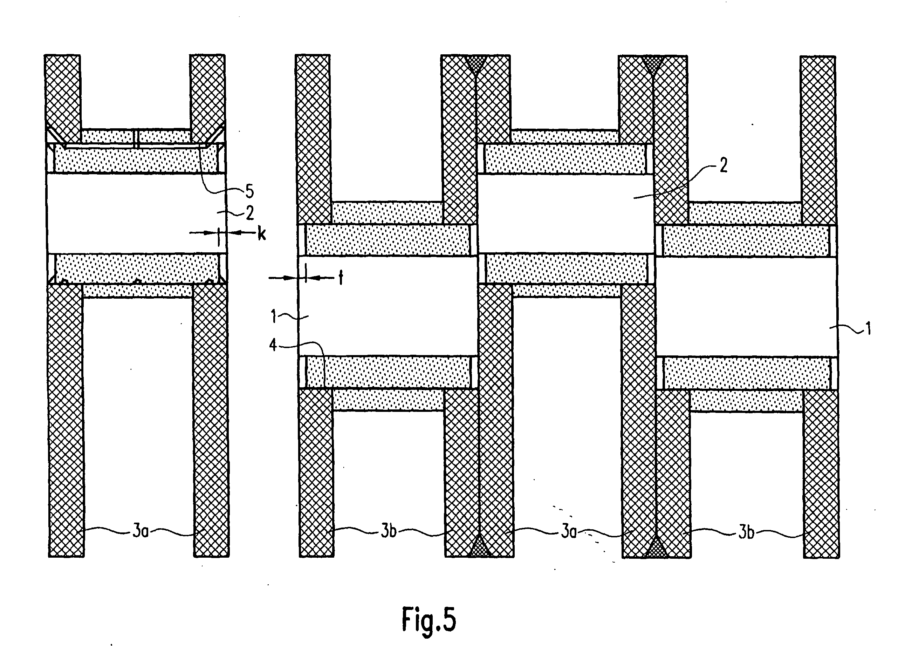

Der Einsatz des Kurbellagerelementes 1 in die Kurbellageröffnung 4 des zweiten Kurbelwangenelementes 3b erfolgt in entsprechender Weise, wie für das erste Ausführungsbeispiel erläutert und in Fig. 5 gezeigt ist. Das Einsetzen des Hublagerelementes 2 in die Hublageröffnung 5 des ersten Kurbelwangenelementes 3a erfolgt ebenfalls in entsprechender Weise, wie in Verbindung mit dem ersten Ausführungsbeispiel beschrieben und in Fig. 5 gezeigt ist. Insbesondere werden die Abstände t und k an den Seitenflächen der Kurbelwangenelemente gebildet, die aneinander anliegen, wie dies in Fig. 5 gezeigt ist.

Wie weiterhin in Fig. 5 gezeigt ist, wird das erste Kurbelwangenelement 3a und das zweite Kurbelwellenelement 3b entlang der äußeren Umfangskontur miteinander verschweißt. Alternativ zu dieser Verbindung können das erste Kurbelwangenelement 3a und das zweite Kurbelwangenelement 3b auch verlötet, verklebt oder verschraubt werden, wobei auch eine Kombination der genannten Verfahren zum Einsatz kommen kann.

Bei dem zweiten Ausführungsbeispiel der gebauten Kurbelwelle ist die Hublageröffnung 5 in dem ersten Kurbelwangenelement 3a ausgebildet; und die Kurbellageröffnung 4 ist in dem zweiten Kurbelwangenelement 3b ausgebildet. Der Hub H der Kurbelwelle wird durch den Abstand der Kurbelwellenachse X (Mittelachse der Kurbellageröffnung 4) von der Mittelachse X1 des Hublagerelementes 2 (der Hublageröffnung 5) bestimmt. Durch die getrennte Ausbildung der die Hublageröffnung 5 und der Kurbellageröffnung 4, können diese Öffnungen (wie in Fig. 3 gezeigt) überlappen. Dadurch ist es möglich den Hub H der Kurbelwelle zu verkürzen ohne die Durchmesser des Hublagerelementes 2 und des Kurbellagerelementes 1 verringern zu müssen; der Hub der Kurbelwelle kann in wesentlichen unabhängig von dem Durchmesser des Hublagerelementes 2 und des Kurbellagerelementes 1 festgelegt werden. Mit dem zweiten Ausführungsbeispiel kann auf einfach Weise eine Kurz-Hub-Kurbelwelle geschaffen werden.

Nachfolgend wird ein Verfahren zur Montage der gebauten Kurbelwelle gemäß dem zweiten Ausführungsbeispiel erläutert. Gemäß diesem Verfahren bildet ein Hublagerelement 2 und zumindest ein erstes plattenförmiges Kurbelwangenelement 3a eine Hublagermontageeinheit, in dem das Hublagerelement 2 in der Hublageröffnung 5 befestigt wird. Ein Kurbellagerelement 1 und ein zweites plattenförmiges Kurbelwangenelement 3b bilden eine Kurbellagermontageeinheit, in dem das Kurbellagerelement 1 in der Kurbellageröffnung 4 des zweiten plattenförmigen Kurbelwangenelementes 3b befestigt wird. Diese Hublagermontageeinheit und diese Kurbellagermontageeinheit werden zusammengefügt, indem das erste plattenförmige Kurbelwangenelement 3a mit dem zweiten plattenförmigen Kurbelwangenelement 3b verbunden, insbesondere in Umfangsrichtung miteinander verschweißt wird, wie dies aus Fig. 5 hervorgeht. Gemäß dem gezeigten Ausführungsbeispiel umfaßt die Hublagermontageeinheit das Hublagerelement 2 und zwei erste plattenförmige Kurbelwangenelemente 3a und die Kurbellagermontageeinheit, das Kurbellagerelement 1, das mit zwei zweiten plattenförmigen Kurbelwangenelementen 3b verbunden ist. Das erstes und das zweite plattenförmige Kurbelwangenelement 3a,3b werden durch verschweißen an deren Außenkontur zusammengefügt.

Bei der Bildung der Hublagermontageeinheit kann bereits ein einteiliges Pleuel (nicht gezeigt) auf das Hublagerelement 2 aufgesteckt werden, bevor die beiden plattenförmigen Kurbelwangenelemente 3a montiert werden.

Bei dem gezeigten zweiten Ausführungsbeispiel kann die Hublagermontageeinheit für verschiedene Kurbelwellen unabhängig von der Zylinderzahl als Gleichteil vorgefertigt werden. Die spezielle Gestaltung der Hublagermontageeinheit legt lediglich den Hub der Kurbelwelle fest.

Die Kurbellagermontageeinheit kann für verschiedene Kurbelwellen unabhängig des Hubs als Gleichteil vorgesehen werden. Durch die Anordnung (Verdrehung zueinander um die Kurbelwellenachse X) der beiden zweiten Kurbelwangenelemente 3b der Kurbellagermontageeinheit wird der Kurbelversatz (Kurbelkröpfung) der Hublagerelemente 2 festgelegt. Diese Festlegung erfolgt in Abhängigkeit der Zylinderzahl der Kolbenhubmaschine.

Dabei ist zu beachten, daß Kolbenhubmaschinen mit unterschiedlichen Zylinderzahlen gleichen Hubelementversatz aufweisen können, so daß auch die Kurbellagermontageeinheit als Gleichteil für Kurbelwellen unterschiedlichen Hubes und in bedingter Weise unterschiedlicher Zylinderzahlen vorgesehen werden kann.

Dieser modulare Aufbau der Kurbelwelle und die modulare Montage über die beschriebenen Hublagermontageeinheiten und Kurbellagermontageeinheiten ermöglicht es, eine Vielzahl unterschiedlicher Kurbelwellen zu fertigen, wobei durch den hohen Gleichteilanteil die Fertigungs-, Lagerungs- und Logistikkosten entscheidend gesenkt werden können. Weiterhin kann durch den modularen Aufbau die Kurbelwelle in kurzer Zeit und in einfacher Weise an eine geänderte Kolbenhubmaschine angepaßt werden.

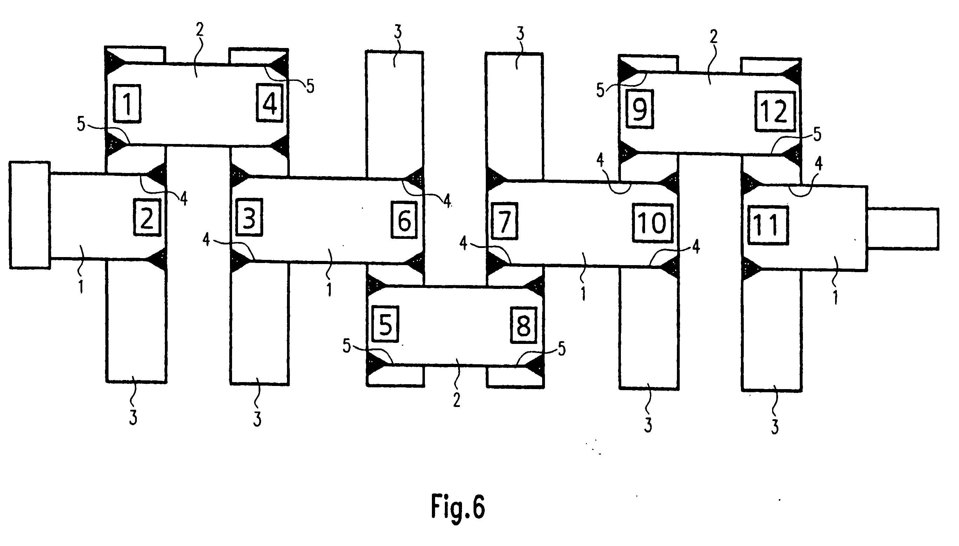

In Verbindung mit Fig. 6 wird nachfolgend ein weiteres Verfahren zur Montage einer modular aufgebauten Kurbelwelle erläutert. Dieses Verfahren ist auf eine Kurbelwelle gemäß dem ersten Ausführungsbeispiel anwendbar. Weiterhin kann dieses Verfahren auch auf eine Kurbelwelle gemäß dem zweiten Ausführungsbeispiel angewendet werden, wenn die Kurbelwange 3 aus dem ersten und zweiten plattenförmigen Kurbelwangenelement 3a, 3b gebildet wird, bevor sowohl das Kurbellagerelement 1 als auch das Hublagerelement 2 in die Kurbelwange eingesetzt wird.

Bei diesem Verfahren wird zunächst das Hublagerelement 2 in die Hublageröffnung 5 der Kurbelwange 3 eingesetzt und befestigt, um eine Hublagermontageeinheit zu bilden. Weiterhin wird das Kurbellagerelement 1 in die Kurbellageröffnung 4 einer weiteren Kurbelwange 3 eingesetzt und befestigt, um eine Kurbellagermontageeinheit zu bilden. Nachfolgend werden abwechselnd eine Hublagermontageeinheit mit einer Kurbellagermontageeinheit zusammengefügt. Dabei wird das Hublagerelement 2 der Hublagermontageeinheit in eine Hublageröffnung 5 der Kurbelwange 3 der Kurbellagermontageeinheit eingesetzt und befestigt. Weiterhin wird das Kurbellagerelement der Kurbellagermontageeinheit in der Kurbellageröffnung 4 der Kurbelwange 3 der Hublagermontageeinheit eingesetzt und befestigt. Bevor das Hublagerelement 2 der Hublagermontageeinheit in die Hublageröffnung 5 der Kurbellagermontageeinheit eingesetzt wird, kann ein einteiliges Pleuel (nicht gezeigt) auf das Hublagerelement 2 aufgesetzt werden.

Der Kurbelversatz (Kurbelkröpfung) der Hublagerelemente 2 wird entsprechend der vorgegebenen Zylinderzahl beim Einsetzen und Positionieren des Kurbellagerelementes 1 der Kurbellagermontageeinheit in die Kurbellageröffnung 4 der Kurbelwange 3 der darauffolgenden Hublagermontageeinheit festgelegt.

Bei der in Fig. 6 gezeigten Ausführungsform einer Dreizylinderkurbelwelle ist die Montagefolge wie folgt: 1-2-3-Pleuel-4-5-6-7-Pleuel-8-9-10-11-Pleuel-12.

Die Ausführungsbeispiele zeigen eine Kurbelwelle für eine Kolbenhubmaschine, insbesondere eine Brennkraftmaschine, mit zumindest einem Kurbellagerelement 1 zur Lagerung der Kurbelwelle, und zumindest einem Hublagerelement 2 zur Lagerung einer Pleuelstange und zumindest einer Kurbelwange 3, welche das Kurbellagerelement 1 mit dem Hublagerelement 2 verbindet. Die Kurbelwelle ist modular aufgebaut und das Kurbellagerelement 1 ist in einer Kurbellageröffnung 4 der Kurbelwange 3 befestigt und das Hublagerelement 2 ist in einer Hublageröffnung 5 der Kurbelwange 3 befestigt ist.

Das Kurbellagerelement 1 weist ein inneres zylinderförmiges Element 1a und ein äußeres zylinderförmiges Hülsenelement 1b auf. Eine innere Umfangsfläche des äußeren zylinderförmigen Hülsenelementes 1b ist auf einer äußeren Umfangsfläche des inneren zylinderförmigen Elementes 1a gelagert. Das innere zylinderförmige Element 1a des Kurbellagerelementes 1 ist als inneres zylinderförmiges Hülsenelement ausgebildet.

Gemäß einer Ausführungsvariante weist das äußere zylinderförmige Hülsenelement 1b des Kurbellagerelementes 1 eine Beschichtung, insbesondere aus Keramik, auf. Gemäß einer alternativen Ausführungsvariante ist das äußere zylinderförmige Hülsenelement 1b des Kurbellagerelementes 1 aus Keramik gebildet.

Die Ausführungsbeispiele beschreiben eine Kurbelwelle, bei der das äußere zylinderförmige Hülsenelement 1b des Kurbellagerelementes 1 und/oder das innere zylinderförmige Element 1a des Kurbellagerelementes 1 eine Schmierölkanaleinrichtung 6 aufweist. Die Schmierölkanaleinrichtung 6 des Kurbellagerelementes 1 weist zumindest einen axialen Kanalabschnitt 6a auf, der sich in axialer Richtung des Kurbellagerelementes 1 erstreckt. Der axiale Kanalabschnitt 6a ist nutförmig in der inneren Umfangsfläche des äußeren zylinderförmigen Hülsenelements des Kurbellagerelementes 1 und/oder in der äußeren Umfangsfläche des inneren zylinderförmigen Element 1a des Kurbellagerelementes 1 ausgebildet. Die Schmierölkanaleinrichtung 6 weist weiterhin zumindest einen ringförmigen Kanalabschnitt 6b auf, der sich in Umfangsrichtung des Kurbellagerelementes 1 erstreckt. Der ringförmige Kanalabschnitt 6b nutförmig in der inneren Umfangsfläche des äußeren zylinderförmigen Hülsenelement 1b des Kurbellagerelementes 1 und/oder in der äußeren Umfangsfläche des inneren zylinderförmigen Element 1a des Kurbellagerelementes 1 ausgebildet. Die Schmierölkanaleinrichtung 6 des Kurbellagerelementes 1 weist weiterhin zumindest einen radialen Kanalabschnitt 6c auf, der sich in radialer Richtung des Kurbellagerelementes 1 bis zu einer äußeren Umfangsfläche des äußeren zylinderförmigen Hülsenelementes 1b erstreckt.

Das Hublagerelement 2 weist ein inneres zylinderförmiges Element 2a und ein äußeres zylinderförmiges Hülsenelement 2b auf. Eine innere Umfangsfläche des äußeren zylinderförmigen Hülsenelementes 2b ist auf einer äußeren Umfangsfläche des inneren zylinderförmigen Elementes 2a gelagert. Das innere zylinderförmige Element des Hublagerelementes 2 ist als inneres zylinderförmiges Hülsenelement 2a ausgebildet.

Gemäß einer Ausführungsvariante weist das äußere zylinderförmige Hülsenelement 2b des Hublagerelementes 2 eine Beschichtung, insbesondere aus Keramik, auf. Gemäß einer alternativen Ausführungsvariante ist äußere zylinderförmige Hülsenelement 2b des Hublagerelementes 2 aus Keramik gebildet.

Die Ausführungsbeispiel beschreiben eine Kurbelwelle bei der das äußere zylinderförmige Hülsenelement 2b des Hublagerelementes 2 und/oder das innere zylinderförmige Element 2a des Hublagerelementes 2 eine Schmierölkanaleinrichtung 7 aufweist. Diese Schmierölkanaleinrichtung 7 des Hublagerelementes 2 weist zumindest einen axialen Kanalabschnitt 7a auf, der sich in axialer Richtung des Hublagerelementes 2 erstreckt. Der axiale Kanalabschnitt 7a ist nutförmig in der inneren Umfangsfläche des äußeren zylinderförmigen Hülsenelement 2b des Hublagerelementes 2 und/oder in der äußeren Umfangsfläche des inneren zylinderförmigen Element 2a des Hublagerelementes 2 ausgebildet. Die Schmierölkanaleinrichtung 7 weist weiterhin zumindest einen ringförmigen Kanalabschnitt 7b auf, der sich in Umfangsrichtung des Hublagerelementes 2 erstreckt. Der ringförmige Kanalabschnitt 7b ist nutförmig in der inneren Umfangsfläche des äußeren zylinderförmigen Hülsenelement 2b des Hublagerelementes 2 und/oder in der äußeren Umfangsfläche des inneren zylinderförmigen Element 2a des Hublagerelementes 2 ausgebildet. Die Schmierölkanaleinrichtung 7 des Hublagerelementes 2 weist weiterhin zumindest einen radialen Kanalabschnitt 7c auf, der sich in radialer Richtung des Hublagerelementes 2 bis zu einer äußeren Umfangsfläche des äußeren zylinderförmigen Hülsenelementes 2b erstreckt.

Bei den gezeigten Ausführungsbeispielen ist ein äußerer Umfangsflächenabschnitt eines Endabschnittes des Kurbellagerelementes 1 in der Kurbellageröffnung 4 der Kurbelwange 3 aufgenommen. Ein äußerer Umfangsflächenabschnitt eines Endabschnittes des Hublagerelementes 2 ist in der Hublageröffnung 5 der Kurbelwange 3 aufgenommen. Die Schmierölverbindungskanaleinrichtung 8 verbindet die Schmierölkanaleinrichtung 6 des Kurbellagerelementes 1 mit einer Schmierölkanaleinrichtung 7 des Hublagerelementes 2. Die Schmierölverbindungskanaleinrichtung weist einen ringförmigen Kanalabschnitt 8a in der Kurbelwange 3 im Bereich der Kurbellageröffnung 4 und/oder im Bereich des Endabschnittes des Kurbellagerelementes 1 auf. Weiterhin ist ein ringförmiger Kanalabschnitt 8b in der Kurbelwange 3 im Bereich der Hublageröffnung 5 und/oder im Bereich des Endabschnittes des Hublagerelementes 2 vorgesehen. Diese ringförmigen Kanalabschnitte 8a,8b sind miteinander verbunden. Der ringförmigen Kanalabschnitt 8a in der Kurbelwange 3 im Bereich der Kurbellageröffnung 4 und/oder im Bereich des Endabschnittes des Kurbellagerelementes 1 ist nutförmig in einer inneren Umfangsfläche der Kurbellageröffnung 4 und/oder einer äußeren Umfangsfläche des Endabschnittes des Kurbellagerelementes 1 ausgebildet. Der ringförmigen Kanalabschnitt 8b in der Kurbelwange 3 im Bereich der Hublageröffnung 5 und/oder im Bereich des Endabschnittes des Hublagerelementes 2 ist nutförmig in einer inneren Umfangsfläche der Hublageröffnung 5 und/oder einer äußeren Umfangsfläche des Endabschnittes des Hublagerelementes 2 ausgebildet.

Die Kurbelwelle gemäß der Ausführungsbeispiele weist Kurbelwangen 3 auf, die im wesentlichen plattenförmig, insbesondere mit gleichmäßiger Dicke in axialer Richtung der Kurbelwelle ausgebildet sind. Gemäß dem zweiten Ausführungsbeispiel weist die Kurbelwange 3 ein erstes und ein zweites plattenförmiges Kurbelwangenelement 3a,3b auf, die sich im wesentlichen parallel zueinander erstrecken und mit gegenüberliegenden Seitenflächen in Anlage zueinander sind. Das erste Kurbelwangenelement 3a weist die Hublageröffnung 5 auf und das zweite Kurbelwangenelement 3b weist die Kurbellageröffnung 4 auf. Das erste und das zweite Kurbelwangenelement 3a,3b weisen jeweils gleiche Umfangskonturenflächen auf. Das erste und das zweite Kurbelwangenelement sind jeweils im Bereich der Umfangskonturenflächen miteinander verbunden, insbesondere verschweißt. Gemäß dem zweiten Ausführungsbeispiel ist die Schmierölverbindungskanaleinrichtung 8 in dem ersten und/oder zweiten plattenförmigen Kurbelwangenelement 3a,3b vorgesehen, die eine Schmierölkanaleinrichtung 6 des Kurbellagerelementes 1 mit einer Schmierölkanaleinrichtung 7 des Hublagerelementes 2 verbindet. Die Schmierölverbindungskanaleinrichtung 8 weist Ausnehmungen in den gegenüberliegenden Seitenflächen des ersten und/oder zweiten plattenförmigen Kurbelwangenelement 3a,3b auf.

Bei den gezeigten Ausführungsbeispielen wurde die Verbindung der Kurbellagerelemente bzw. der Hublagerelemente mit den Kurbelwangen durch Verpressen und/oder Verschweißen erreicht. Alternativ dazu können die genannten Elemente auch durch Löten, Verkleben, Verschrauben oder Aufschrumpfen miteinander verbunden werden. Die Kurbellagerelemente und die Hublagerelemente müssen mit den Kurbelwangen kraftschlüssig verbunden werden, so daß sich die Winkelstellung zwischen diesen Elementen nicht verändert. Um die Winkelstellung festzulegen, kann zusätzlich eine formschlüssige Verbindung in Form einer Verzahnung vorgesehen werden. Dabei wird die Winkelstellung für die Montage in einfacher Weise festgelegt.

Die gebaute Kurbelwelle gemäß der gezeigten Ausführungsbeispiele kann in hochautomatisierter Weise montiert werden. Durch die hohe Anzahl von Gleichteilen sowie die Verwendung von ähnlichen Teilen läßt sich der Konstruktionsaufwand und der Fertigungsaufwand erheblich reduzieren, insbesondere im Hinblick auf die unterschiedliche Gestaltung der jeweiligen Kurbelwelle.

Weiterhin ermöglicht der modulare Aufbau Werkstoffe im Hinblick auf die unterschiedlichen Funktionen der Teile der Kurbelwelle auszuwählen und so eine weitere Gewichtsreduzierung zu erreichen. Da es sich bei der Kurbelwelle um eine bewegte (rotierende) Masse in der Kolbenhubmaschine, beispielsweise eines Motors eines Kraftfahrzeugs handelt, ist diese Gewichtsreduzierung gleichbedeutend mit einem agileren Verhalten hinsichtlich Drehzahländerungen sowie einer Verringerung des Energiebedarfs.

Ein weiterer wesentlicher Vorteil ist die Verwendung von geschlossenen bzw. einteiligen Pleuel. Diese lassen sich durch den Wegfall geteilter Lager kleiner dimensionieren und damit leichter ausführen. Eine daraus resultierende Gewichtsersparung wirkt sich auf die Gegengewichte der Kurbelwangen aus, so daß wiederum eine weitere Reduzierung der rotatorischen Massen erfolgen kann.

## Patentansprüche

1. Kurbelwelle für eine Kolbenhubmaschine, insbesondere eine Brennkraftmaschine, mit zumindest einem Kurbellagerelement (1) zur Lagerung der Kurbelwelle, zumindest einem Hublagerelement (2) zur Lagerung einer Pleuelstange und zumindest einer Kurbelwange (3), welche das Kurbellagerelement (1) mit dem Hublagerelement (2) verbindet, wobei die Kurbelwelle modular aufgebaut ist und das Kurbellagerelement (1) in einer Kurbellageröffnung (4) der Kurbelwange (3) befestigt ist und das Hublagerelement (2) in einer Hublageröffnung (5) der Kurbelwange (3) befestigt ist,
**dadurch gekennzeichnet, daß** das Kurbellagerelement (1) ein inneres zylinderförmiges Element (1a) und ein äußeres zylinderförmiges Hülsenelement (1b) aufweist, wobei ein äußerer Umfangsflächenabschnitt eines Endabschnittes des Kurbellagerelementes (1) in der Kurbellageröffnung (4) der Kurbelwange (3) aufgenommen ist, und wobei eine innere Umfangsfläche des äußeren zylinderförmigen Hülsenelementes (1b) auf einer äußeren Umfangsfläche des inneren zylinderförmigen Elementes (1a) als ein Gleitlager gelagert ist.

2. Kurbelwelle nach Anspruch 1, **dadurch gekennzeichnet, daß** das innere zylinderförmige Element (1a) des Kurbellagerelementes (1) als inneres zylinderförmiges Hülsenelement ausgebildet ist.

3. Kurbelwelle nach Anspruch 1 oder 2, **dadurch gekennzeichnet, daß** das äußere zylinderförmige Hülsenelement (1b) des Kurbellagerelementes (1) eine Beschichtung, insbesondere aus Keramik, aufweist.

4. Kurbelwelle nach Anspruch 1 oder 2, **dadurch gekennzeichnet, daß** das äußere zylinderförmige Hülsenelement (1b) des Kurbellagerelementes (1) aus Keramik gebildet ist.

5. Kurbelwelle nach einem der Ansprüche 1 bis 4, **dadurch gekennzeichnet, daß** das äußere zylinderförmige Hülsenelement (1b) des Kurbellagerelementes (1) und/oder das innere zylinderförmige Element (1a) des Kurbellagerelementes (1) eine Schmierölkanaleinrichtung (6) aufweist.

6. Kurbelwelle nach Anspruch 5, **dadurch gekennzeichnet, daß** die Schmierölkanaleinrichtung (6) des Kurbellagerelementes (1) zumindest einen axialen Kanalabschnitt (6a) aufweist, der sich in axialer Richtung des Kurbellagerelementes (1) erstreckt.

7. Kurbelwelle nach Anspruch 6, **dadurch gekennzeichnet, daß** der axiale Kanalabschnitt (6a) nutförmig in der inneren Umfangsfläche des äußeren zylinderförmigen Hülsenelements des Kurbellagerelementes (1) und/oder in der äußeren Umfangsfläche des inneren zylinderförmigen Elements (1a) des Kurbellagerelementes (1) ausgebildet ist.

8. Kurbelwelle nach einem der Ansprüche 5 bis 7, **dadurch gekennzeichnet, daß** die Schmierölkanaleinrichtung (6) zumindest einen ringförmigen Kanalabschnitt (6b) aufweist, der sich in Umfangsrichtung des Kurbellagerelementes (1) erstreckt.

9. Kurbelwelle nach Anspruch 8, **dadurch gekennzeichnet, daß** der ringförmige Kanalabschnitt (6b) nutförmig in der inneren Umfangsfläche des äußeren zylinderförmigen Hülsenelements (1b) des Kurbellagerelementes (1) und/oder in der äußeren Umfangsfläche des inneren zylinderförmigen Elements (1a) des Kurbellagerelementes (1) ausgebildet ist.

10. Kurbelwelle nach einem der Ansprüche 5 bis 9, **dadurch gekennzeichnet, daß** die Schmierölkanaleinrichtung (6) des Kurbellagerelementes (1) zumindest einen radialen Kanalabschnitt (6c) aufweist, der sich in radialer Richtung des Kurbellagerelementes (1) bis zu einer äußeren Umfangsfläche des äußeren zylinderförmigen Hülsenelementes (1b) erstreckt.

11. Kurbelwelle nach einem der Ansprüche 1 bis 10, **dadurch gekennzeichnet, daß** das Hublagerelement (2) ein inneres zylinderförmiges Element (2a) und ein äußeres zylinderförmiges Hülsenelement (2b) aufweist, wobei eine innere Umfangsfläche des äußeren zylinderförmigen Hülsenelementes (2b) auf einer äußeren Umfangsfläche des inneren zylinderförmigen Elementes (2a) gelagert ist.

12. Kurbelwelle nach Anspruch 11, **dadurch gekennzeichnet, daß** das innere zylinderförmige Element des Hublagerelementes (2) als inneres zylinderförmiges Hülsenelement (2a) ausgebildet ist.

13. Kurbelwelle nach Anspruch 11 oder 12, **dadurch gekennzeichnet, daß** das äußere zylinderförmige Hülsenelement (2b) des Hublagerelementes (2) eine Beschichtung, insbesondere aus Keramik, aufweist.

14. Kurbelwelle nach Anspruch 11 oder 12, **dadurch gekennzeichnet, daß** das äußere zylinderförmige Hülsenelement (2b) des Hublagerelementes (2) aus Keramik gebildet ist.

15. Kurbelwelle nach einem der Ansprüche 11 bis 14, **dadurch gekennzeichnet, daß** das äußere zylinderförmige Hülsenelement (2b) des Hublagerelementes (2) und/oder das innere zylinderförmige Element (2a) des Hublagerelementes (2) eine Schmierölkanaleinrichtung (7) aufweist.

16. Kurbelwelle nach Anspruch 15, **dadurch gekennzeichnet, daß** die Schmierölkanaleinrichtung (7) des Hublagerelementes (2) zumindest einen axialen Kanalabschnitt (7a) aufweist, der sich in axialer Richtung des Hublagerelementes (2) erstreckt.

17. Kurbelwelle nach Anspruch 16, **dadurch gekennzeichnet, daß** der axiale Kanalabschnitt (7a) nutförmig in der inneren Umfangsfläche des äußeren zylinderförmigen Hülsenelements (2b) des Hublagerelementes (2) und/oder in der äußeren Umfangsfläche des inneren zylinderförmigen Elements (2a) des Hublagerelementes (2) ausgebildet ist.

18. Kurbelwelle nach einem der Ansprüche 15 bis 17, **dadurch gekennzeichnet, daß** die Schmierölkanaleinrichtung (7) zumindest einen ringförmigen Kanalabschnitt (7b) aufweist, der sich in Umfangsrichtung des Hublagerelementes (2) erstreckt.

19. Kurbelwelle nach Anspruch 18, **dadurch gekennzeichnet, daß** der ringförmige Kanalabschnitt (7b) nutförmig in der inneren Umfangsfläche des äußeren zylinderförmigen Hülsenelements (2b) des Hublagerelementes (2) und/oder in der äußeren Umfangsfläche des inneren zylinderförmigen Elements (2a) des Hublagerelementes (2) ausgebildet ist.

20. Kurbelwelle nach einem der Ansprüche 15 bis 19, **dadurch gekennzeichnet, daß** die Schmierölkanaleinrichtung (7) des Hublagerelementes (2) zumindest einen radialen Kanalabschnitt (7c) aufweist, der sich in radialer Richtung des Hublagerelementes (2) bis zu einer äußeren Umfangsfläche des äußeren zylinderförmigen Hülsenelementes (2b) erstreckt.

21. Kurbelwelle nach einem der Ansprüche 1 bis 20, **dadurch gekennzeichnet, daß** ein äußerer Umfangsflächenabschnitt eines Endabschnittes des Kurbellagerelementes (1) in der Kurbellageröffnung (4) der Kurbelwange (3) aufgenommen ist, ein äußerer Umfangsflächenabschnitt eines Endabschnittes des Hublagerelementes (2) in der Hublageröffnung (5) der Kurbelwange (3) aufgenommen ist, wobei eine Schmierölverbindungskanaleinrichtung (8) vorgesehen ist, die eine Schmierölkanaleinrichtung (6) des Kurbellagerelementes (1) mit einer Schmierölkanaleinrichtung (7) des Hublagerelementes (2) verbindet.

22. Kurbelwelle nach Anspruch 21, **dadurch gekennzeichnet, daß** die Schmierölverbindungskanaleinrichtung einen ringförmigen Kanalabschnitt (8a) in der Kurbelwange (3) im Bereich der Kurbellageröffnung (4) und/oder im Bereich des Endabschnittes des Kurbellagerelementes (1) aufweist, und einen ringförmigen Kanalabschnitt (8b) in der Kurbelwange (3) im Bereich der Hublageröffnung (5) und/oder im Bereich des Endabschnittes des Hublagerelementes (2) aufweist, wobei die ringförmigen Kanalabschnitte (8a,8b) miteinander verbunden sind.

23. Kurbelwelle nach Anspruch 22, **dadurch gekennzeichnet, daß** der ringförmige Kanalabschnitt (8a) in der Kurbelwange (3) im Bereich der Kurbellageröffnung (4) und/oder im Bereich des Endabschnittes des Kurbellagerelementes (1) nutförmig in einer inneren Umfangsfläche der Kurbellageröffnung (4) und/oder einer äußeren Umfangsfläche des Endabschnittes des Kurbellagerelementes (1) ausgebildet ist.

24. Kurbelwelle nach Anspruch 22 oder 23, **dadurch gekennzeichnet, daß** der ringförmige Kanalabschnitt (8b) in der Kurbelwange (3) im Bereich der Hublageröffnung (5) und/oder im Bereich des Endabschnittes des Hublagerelementes (2) nutförmig in einer inneren Umfangsfläche der Hublageröffnung (5) und/oder einer äußeren Umfangsfläche des Endabschnittes des Hublagerelementes (2) ausgebildet ist.

25. Kurbelwelle nach einem der Ansprüche 1 bis 24, **dadurch gekennzeichnet, daß** die Kurbelwange (3) im wesentlichen plattenförmig, insbesondere mit gleichmäßiger Dicke in axialer Richtung der Kurbelwelle ausgebildet ist.

26. Kurbelwelle nach Anspruch 25, **dadurch gekennzeichnet, daß** die Kurbelwange (3) ein erstes und ein zweites plattenförmiges Kurbelwangenelement (3a,3b) aufweist, die sich im wesentlichen parallel zueinander erstrecken und mit gegenüberliegenden Seitenflächen in Anlage zueinander sind.

27. Kurbelwelle nach Anspruch 26, **dadurch gekennzeichnet, daß** das erste Kurbelwangenelement (3a) die Hublageröffnung (5) aufweist und das zweite Kurbelwangenelement (3b) die Kurbellageröffnung (4) aufweist.

28. Kurbelwelle nach Anspruch 26 oder 27, **dadurch gekennzeichnet, daß** das erste und das zweite Kurbelwangenelement (3a,3b) jeweils gleiche Umfangskonturenflächen aufweisen.

29. Kurbelwelle nach Anspruch 28, **dadurch gekennzeichnet, daß** das erste und das zweite Kurbelwangenelement jeweils im Bereich der Umfangskonturenflächen miteinander verbunden, insbesondere verschweißt, sind.

30. Kurbelwelle nach einem der Ansprüche 26 bis 29, **dadurch gekennzeichnet, daß** eine Schmierölverbindungskanaleinrichtung (8) in dem ersten und/oder zweiten plattenförmigen Kurbelwangenelement (3a,3b) vorgesehen ist, die eine Schmierölkanaleinrichtung (6) des Kurbellagerelementes (1) mit einer Schmierölkanaleinrichtung (7) des Hublagerelementes (2) verbindet, wobei die Schmierölverbindungskanaleinrichtung (8) Ausnehmungen in den gegenüberliegenden Seitenflächen des ersten und/oder zweiten plattenförmigen Kurbelwangenelements (3a,3b) aufweist.

31. Verfahren zur Montage einer Kurbelwelle, die modular aufgebaut ist, wobei ein Kurbellagerelement (1) in einer Kurbellageröffnung (4) einer Kurbelwange (3) befestigt ist, und wobei ein Hublagerelement (2) in einer Hublageröffnung (5) der Kurbelwange (3) befestigt ist, zur Montage einer Kurbelwelle nach einem der Ansprüche 1 bis 30,
wobei das Hublagerelement (2) in der Hublageröffnung (5) einer Kurbelwange (3) derart befestigt wird und eine Hublagermontageeinheit bildet, daß in axialer Richtung einer Drehachse (X) der Kurbelwelle ein Abstand (k) zwischen einer Stirnfläche des inneren zylinderförmigen Elementes (2a) und einer benachbarten Seitenfläche der Kurbelwange 3 verbleibt,
wobei das Kurbellagerelement (1) in einer Kurbellageröffnung (4) einer weiteren Kurbelwange (3) derart befestigt wird und eine Kurbellagermontageeinheit bildet, daß in axialer Richtung einer Drehachse (X) der Kurbelwelle ein Abstand (t) zwischen einer Stirnfläche des inneren zylinderförmigen Hülsenelementes (1a) und einer benachbarten Seitenfläche der Kurbelwange (3) verbleibt,
und wobei nacheinander abwechselnd eine Hublagermontageeinheit mit einer Kurbellagermontageeinheit zusammengefügt wird.

32. Verfahren zur Montage einer Kurbelwelle nach Anspruch 31, **dadurch gekennzeichnet, daß** bei der Montage einer Kurbellagermontageeinheit auf eine Hublagermontageeinheit das Hublagerelement (2) der Hublagermontageeinheit in einer Hublageröffnung (5) der Kurbelwange (3) der Kurbellagermontageeinheit befestigt wird, und bei der Montage einer Hublagermontageeinheit auf eine Kurbellagermontageeinheit das Kurbellagerelement (1) der Kurbellagermontageeinheit in einer Kurbellageröffnung (4) der Kurbelwange (3) der Hublagermontageeinheit befestigt wird.

33. Verfahren zur Montage einer Kurbelwelle nach Anspruch 31 oder 32, **dadurch gekennzeichnet, daß** ein einteiliges Pleuel auf das Hublagerelement (2) aufgesetzt wird.

34. Verfahren zur Montage einer Kurbelwelle, die modular aufgebaut ist,
wobei ein Kurbellagerelement (1) in einer Kurbellageröffnung (4) einer Kurbelwange (3) derart befestigt ist, daß in axialer Richtung einer Drehachse (X) der Kurbelwelle ein Abstand (t) zwischen einer Stirnfläche des inneren zylinderförmigen Hülsenelementes (1a) und einer benachbarten Seitenfläche der Kurbelwange (3) verbleibt,
wobei ein Hublagerelement (2) in einer Hublageröffnung (5) der Kurbelwange (3) derart befestigt ist, daß in axialer Richtung einer Drehachse (X) der Kurbelwelle ein Abstand (k) zwischen einer Stirnfläche des inneren zylinderförmigen Elementes (2a) und einer benachbarten Seitenfläche der Kurbelwange 3 verbleibt,
und wobei die Kurbelwange (3) ein erstes und ein zweites plattenförmiges Kurbelwangenelement (3a,3b) aufweist, die sich im wesentlichen parallel zueinander erstrecken und mit gegenüberliegenden Seitenflächen in Anlage zueinander sind, zur Montage einer Kurbelwelle nach einem der Ansprüche 26 bis 30,
wobei eine Hublagermontageeinheit das Hublagerelement (2) aufweist, das in einer Hublageröffnung (5) des ersten plattenförmigen Kurbelwangenelementes (3a) befestigt ist und eine Kurbellagermontageeinheit das Kurbellagerelement (1) aufweist, das in einer Kurbellageröffnung (4) des zweiten plattenförmigen Kurbelwangenelementes (3b) befestigt ist, wobei das erste plattenförmige Kurbelwangenelement (3a) der Hublagermontageeinheit mit dem zweiten plattenförmigen Kurbelwangenelement (3b) der Kurbellagermontageeinheit zusammengefügt wird.

35. Verfahren zur Montage einer Kurbelwelle nach Anspruch 34, **dadurch gekennzeichnet, daß** die Hublagermontageeinheit zwei erste plattenförmige Kurbelwangenelemente (3a) aufweist, die an Endabschnitten des Hublagerelementes (2) befestigt sind und/oder die Kurbellagermontageeinheit zwei zweite plattenförmige Kurbelwangenelemente (3b) aufweist, die an Endabschnitten des Kurbellagerelementes (1) befestigt sind.

36. Verfahren zur Montage einer Kurbelwelle nach Anspruch 34 oder 35, **dadurch gekennzeichnet, daß** das erstes und das zweite plattenförmige Kurbelwangenelement (3a,3b) durch verschweißen an deren Außenkontur zusammengefügt werden.

37. Verfahren zur Montage einer Kurbelwelle nach einem der Ansprüche 33 bis 36, **dadurch gekennzeichnet, daß** die Hublagermontageeinheit ein einteiliges Pleuel aufweist.

## Claims

1. Crankshaft for a piston stroke engine, in particular an internal combustion engine, with at least one crank bearing element (1) for supporting the crankshaft, at least one stroke bearing element (2) for supporting a connecting rod, and at least one crank cheek (3), which connects the crank bearing element (1) and the stroke bearing element (2), in which the crankshaft is of modular construction and the crank bearing element (1) is secured in a crank bearing opening (4) of the crank cheek (3), and the stroke bearing element (2) is secured in a stroke bearing opening (5) of the crank cheek (3), **characterised in that** the crank bearing element (1) comprises an inner cylindrical element (1a) and an outer cylindrical sleeve element (1b), wherein an outer circumferential surface section of an end section of the crank bearing element (1) is accommodated in the crank bearing opening (4) of the crank cheek (3), and wherein an inner circumferential surface of the outer cylindrical sleeve element (1b) is supported on an outer circumferential surface of the inner cylindrical element (1a) as a sliding bearing.

2. Crankshaft according to claim 1, **characterised in that** the inner cylindrical element (1a) of the crank bearing element (1) is formed as an inner cylindrical sleeve element.

3. Crankshaft according to claim 1 or 2, **characterised in that** the outer cylindrical sleeve element (1b) of the crank bearing element (1) has a coating, in particular of ceramic material.

4. Crankshaft according to claim 1 or 2, **characterised in that** the outer cylindrical sleeve element (1b) of the crank bearing element (1) is formed of ceramic material.

5. Crankshaft according to one of claims 1 to 4, **characterised in that** the outer cylindrical sleeve element (1b) of the crank bearing element (1) and/or the inner cylindrical element (1a) of the crank bearing element (1) has a lubricating oil channel arrangement (6).

6. Crankshaft according to claim 5, **characterised in that** the lubricating oil channel arrangement (6) of the crank bearing element (1) comprises at least one axial channel section (6a) that extends in the axial direction of the crank bearing element (1).

7. Crankshaft according to claim 6, **characterised in that** the axial channel section (6a) is formed having grooves in the inner circumferential surface of the outer cylindrical sleeve element of the crank bearing element (1) and/or in the outer circumferential surface of the inner cylindrical element (1a) of the crank bearing element (1).

8. Crankshaft according to one of claims 5 to 7, **characterised in that** the lubricating oil channel arrangement (6) comprises at least one annular channel section (6b) that extends in the circumferential direction of the crank bearing element (1).

9. Crankshaft according to claim 8, **characterised in that** the annular channel section (6b) is designed having grooves in the inner circumferential surface of the outer cylindrical sleeve element (1b) of the crank bearing element (1) and/or in the outer circumferential surface of the inner cylindrical element (1a) of the crank bearing element (1).

10. Crankshaft according to one of claims 5 to 9, **characterised in that** the lubricating oil channel arrangement (6) of the crank bearing element (1) comprises at least one radial channel section (6c) that extends in the radial direction of the crank bearing element (1) as far as an outer circumferential surface of the outer cylindrical sleeve element (1b).

11. Crankshaft according to one of claims 1 to 10, **characterised in that** the stroke bearing element (2) comprises an inner cylindrical element (2a) and an outer cylindrical sleeve element (2b), wherein an inner circumferential surface of the outer cylindrical sleeve element (2b) is supported on an outer circumferential surface of the inner cylindrical element (2a).

12. Crankshaft according to claim 11, **characterised in that** the inner cylindrical element of the stroke bearing element (2) is designed as an inner cylindrical sleeve element (2a).

13. Crankshaft according to claim 11 or 12, **characterised in that** the outer cylindrical sleeve element (2b) of the stroke bearing element (2) has a coating, in particular of ceramic material.

14. Crankshaft according to claim 11 or 12, **characterised in that** the outer cylindrical sleeve element (2b) of the stroke bearing element (2) is formed of ceramic material.

15. Crankshaft according to one of claims 11 to 14, **characterised in that** the outer cylindrical sleeve element (2b) of the stroke bearing element (2) and/or the inner cylindrical element (2a) of the stroke bearing element (2) comprises a lubricating oil channel arrangement (7).

16. Crankshaft according to claim 15, **characterised in that** the lubricating oil channel arrangement (7) of the stroke bearing element (2) comprises at least one axial channel section (7a) that extends in the axial direction of the stroke bearing element (2).

17. Crankshaft according to claim 16, **characterised in that** the axial channel section (7a) is designed with grooves in the inner circumferential surface of the outer cylindrical sleeve element (2b) of the stroke bearing element (2) and/or in the outer circumferential surface of the inner cylindrical element (2a) of the stroke bearing element (2).

18. Crankshaft according to one of claims 15 to 17, **characterised in that** the lubricating oil channel arrangement (7) comprises at least one annular channel section (7b) that extends in the circumferential direction of the stroke bearing element (2).

19. Crankshaft according to claim 18, **characterised in that** the annular channel section (7b) is designed with grooves in the internal circumferential surface of the outer cylindrical sleeve element (2b) of the stroke bearing element (2) and/or in the outer circumferential surface of the inner cylindrical element (2a) of the stroke bearing element (2).

20. Crankshaft according to one of claims 15 to 19, **characterised in that** the lubricating oil channel arrangement (7) of the stroke bearing element (2) comprises at least one radial channel section (7c) that extends in the radial direction of the stroke bearing element (2) as far as an outer circumferential surface of the outer cylindrical sleeve element (2b).

21. Crankshaft according to one of claims 1 to 20, **characterised in that** an outer circumferential surface section of an end section of the crank bearing element (1) is accommodated in the crank bearing opening (4) of the crank cheek (3) and an outer circumferential surface section of an end section of the stroke bearing element (2) is accommodated in the stroke bearing opening (5) of the crank cheek (3), wherein a lubricating oil connecting channel arrangement (8) is provided that connects a lubricating oil channel arrangement (6) of the crank bearing element (1) and a lubricating oil channel arrangement (7) of the stroke bearing element (2).

22. Crankshaft according to claim 21, **characterised in that** the lubricating oil connecting channel arrangement has an annular channel section (8a) in the crank cheek (3) in the region of the crank bearing opening (4) and/or in the region of the end section of the crank bearing element (1), and has an annular channel section (8b) in the crank cheek (3) in the region of the stroke bearing opening (5) and/or in the region of the end section of the stroke bearing element (2), wherein the annular channel sections (8a, 8b) are joined to one another.

23. Crankshaft according to claim 22, **characterised in that** the annular channel section (8a) in the crank cheek (3) in the region of the crank bearing opening (4) and/or in the region of the end section of the crank bearing element (1) is designed with grooves in an inner circumferential surface of the crank bearing opening (4) and/or in an outer circumferential surface of the end section of the crank bearing element (1).

24. Crankshaft according to claim 22 or 23, **characterised in that** the annular channel section (8b) in the crank cheek (3) in the region of the stroke bearing opening (5) and/or in the region of the end section of the stroke bearing element (2) is designed with grooves in an inner circumferential surface of the stroke bearing opening (5) and/or in an outer circumferential surface of the end section of the stroke bearing element (2).

25. Crankshaft according to one of claims 1 to 24, **characterised in that** the crank cheek (3) is designed to be substantially plate-shaped, in particular with a uniform thickness in the axial direction of the crankshaft.

26. Crankshaft according to claim 25, **characterised in that** the crank cheek (3) comprises a first and a second plate-shaped crank cheek element (3a, 3b), which extend substantially parallel to one another and abut one another on oppositely facing side walls.

27. Crankshaft according to claim 26, **characterised in that** the first crank cheek element (3a) comprises the stroke bearing opening (5) and the second crank cheek element (3b) comprises the crank bearing opening (4).

28. Crankshaft according to claim 26 or 27, **characterised in that** the first and the second crank cheek elements (3a, 3b) in each case have identical circumferential contour surfaces.

29. Crankshaft according to claim 28, **characterised in that** the first and the second crank cheek elements are in each case joined to one another, in particular welded, in the region of the circumferential contour surfaces.

30. Crankshaft according to one of claims 26 to 29, **characterised in that** a lubricating oil connecting channel arrangement (8) is provided in the first and/or second plate-shaped crank cheek element (3a, 3b), which arrangement connects a lubricating oil channel arrangement (6) of the crank bearing element (1) to a lubricating oil channel arrangement (7) of the stroke bearing element (2), wherein the lubricating oil connecting channel arrangement (8) comprises recesses in the oppositely facing side surfaces of the first and/or second plate-shaped crank cheek element (3a, 3b).

31. Method for installing a crankshaft which is of modular construction, wherein a crank bearing element (1) is secured in a crank bearing opening (4) of a crank cheek (3), and wherein a stroke bearing element (2) is secured in a stroke bearing opening (5) of the crank cheek (3), for the installation of a crankshaft according to one of claims 1 to 30, wherein the stroke bearing element (2) is secured in such a way in the stroke bearing opening (5) of a crank cheek (3) and forms a stroke bearing installation unit, that in the axial direction of an axis of rotation (X) of the crankshaft an interspacing (k) remains between a front surface of the inner cylindrical element (2a) and an adjacent lateral surface of the crank cheek (3), wherein the crank bearing element (1) is secured in such a way in a crank bearing opening (4) of a further crank cheek (3) and forms a crank bearing installation unit, that in the axial direction of an axis of rotation (X) of the crankshaft an interspacing (t) remains between a front surface of the inner cylindrical sleeve element (1a) and an adjacent lateral surface of the crank cheek (3), and wherein a stroke bearing installation unit and a crank bearing installation unit are successively and alternately joined to one another.

32. Method for installing a crankshaft according to claim 31, **characterised in that** when installing a crank bearing installation unit on a stroke bearing installation unit the stroke bearing element (2) of the stroke bearing installation unit is secured in a stroke bearing opening (5) of the crank cheek (3) of the crank bearing installation unit, and when installing a stroke bearing installation unit on a crank bearing installation unit the crank bearing element (1) of the crank bearing installation unit is secured in a crank bearing opening (4) of the crank cheek (3) of the stroke bearing installation unit.

33. Method for installing a crankshaft according to claim 31 or 32, **characterised in that** a one-part connecting rod is mounted on the stroke bearing element (2).

34. Method for installing a crankshaft that is of modular construction, wherein a crank bearing element (1) is secured in a crank bearing opening (4) of a crank cheek (3) in such a way that, in the axial direction of an axis of rotation (X) of the crankshaft, a distance (t) remains between a front surface of the inner cylindrical sleeve element (1a) and an adjacent lateral surface of the crank cheek (3), wherein a stroke bearing element (2) is secured in a stroke bearing opening (5) of the crank cheek (3) in such a way that, in the axial direction of an axis of rotation (X) of the crankshaft, a distance (k) remains between a front surface of the inner cylindrical element (2a) and an adjacent lateral surface of the crank cheek (3), and wherein the crank cheek (3) comprises a first and a second plate-shaped crank cheek element (3a, 3b) which extend substantially parallel to one another and abut one another on oppositely facing lateral surfaces, for the installation of a crankshaft according to one of claims 26 to 30, wherein a stroke bearing installation unit comprises the stroke bearing element (2), which is secured in a stroke bearing opening (5) of the first plate-shaped crank cheek element (3a), and a crank bearing installation unit comprises the crank bearing element (1), which is secured in a crank bearing opening (4) of the second plate-shaped crank cheek element (3b), wherein the first plate-shaped crank cheek element (3a) of the stroke bearing installation unit is connected to the second plate-shaped crank cheek element (3b) of the crank bearing installation unit.

35. Method for installing a crankshaft according to claim 34, **characterised in that** the stroke bearing installation unit comprises two first plate-shaped crank cheek elements (3a), which are secured to end sections of the stroke bearing element (2), and/or the crank bearing installation unit comprises two second plate-shaped crank cheek elements (3b), which are secured to end sections of the crank bearing element (1).

36. Method for installing a crankshaft according to claim 34 or 35, **characterised in that** the first and the second plate-shaped crank cheek elements (3a, 3b) are joined together on their outer contour by welding.

37. Method for installing a crankshaft according to one of claims 33 to 36, **characterised in that** the stroke bearing installation unit comprises a one-part connecting rod.

## Revendications

1. Vilebrequin pour un moteur à pistons alternatifs, en particulier un moteur à combustion interne, comportant au moins un élément de palier de vilebrequin (1) destiné au montage du vilebrequin, au moins un élément de palier de bielle (2) destiné au montage d'une bielle, et au moins un flasque de vilebrequin (3) qui relie l'élément de palier de vilebrequin (1) à l'élément de palier de bielle (2), dans lequel le vilebrequin a une structure modulaire et l'élément de palier de vilebrequin (1) est fixé dans une ouverture pour palier de vilebrequin (4) dans le flasque de vilebrequin (3) et l'élément de palier de bielle (2) est fixé dans une ouverture pour palier de bielle (5) du flasque de vilebrequin (3), **caractérisé en ce que** l'élément de palier de vilebrequin (1) comporte un élément cylindrique intérieur (1a) et un manchon cylindrique extérieur (1b), une partie de surface périphérique extérieure d'une partie d'extrémité de l'élément de palier de vilebrequin (1) étant logée dans l'ouverture pour palier de vilebrequin (4) du flasque de vilebrequin (3) et une surface périphérique intérieure du manchon cylindrique extérieur (1b) étant montée sous forme de palier lisse sur une surface périphérique extérieure de l'élément cylindrique intérieur (1a).

2. Vilebrequin selon la revendication 1, **caractérisé en ce que** l'élément cylindrique intérieur (1a) de l'élément de palier de vilebrequin (1) est réalisé sous forme de manchon cylindrique intérieur.

3. Vilebrequin selon la revendication 1 ou 2, **caractérisé en ce que** le manchon cylindrique extérieur (1b) de l'élément de palier de vilebrequin (1) est muni d'un revêtement, en particulier en céramique.

4. Vilebrequin selon la revendication 1 ou 2, **caractérisé en ce que** le manchon cylindrique extérieur (1b) de l'élément de palier de vilebrequin (1) est réalisé en céramique.

5. Vilebrequin selon l'une quelconque des revendications 1 à 4, **caractérisé en ce que** le manchon cylindrique extérieur (1b) de l'élément de palier de vilebrequin (1) et/ou l'élément cylindrique intérieur (1a) de l'élément de palier de vilebrequin (1) comporte (nt) un dispositif à conduit d'huile de lubrification (6).

6. Vilebrequin selon la revendication 5, **caractérisé en ce que** le dispositif à conduit d'huile de lubrification (6) de l'élément de palier de vilebrequin (1) comporte au moins une partie de conduit axiale (6a), qui s'étend dans le sens axial de l'élément de palier de vilebrequin (1).

7. Vilebrequin selon la revendication 6, **caractérisé en ce que** la partie de conduit axiale (6a) est réalisée sous la forme d'une rainure dans la surface périphérique intérieure du manchon cylindrique extérieur (1b) de l'élément de palier de vilebrequin (1) et/ou dans la surface périphérique extérieure de l'élément cylindrique intérieur (1a) de l'élément de palier de vilebrequin (1).

8. Vilebrequin selon l'une quelconque des revendications 5 à 7, **caractérisé en ce que** le dispositif à conduit d'huile de lubrification (6) comporte au moins une partie de conduit annulaire (6b), qui s'étend dans le sens périphérique de l'élément de palier de vilebrequin (1).

9. Vilebrequin selon la revendication 8, **caractérisé en ce que** la partie de conduit annulaire (6b) est réalisée sous la forme d'une rainure dans la surface périphérique intérieure du manchon cylindrique extérieur (1b) de l'élément de palier de vilebrequin (1) et/ou dans la surface périphérique extérieure de l'élément cylindrique intérieur (1a) de l'élément de palier de vilebrequin (1).

10. Vilebrequin selon l'une quelconque des revendications 5 à 9, **caractérisé en ce que** le dispositif à conduit d'huile de lubrification (6) de l'élément de palier de vilebrequin (1) comporte au moins une partie de conduit radiale (6c) qui s'étend dans le sens radial de l'élément de palier de vilebrequin (1) jusqu'à une surface périphérique extérieure du manchon cylindrique extérieur (1b).

11. Vilebrequin selon l'une quelconque des revendications 1 à 10, **caractérisé en ce que** l'élément de palier de bielle (2) comporte un élément cylindrique intérieur (2a) et un élément de manchon cylindrique extérieur (2b), une surface périphérique intérieure du manchon cylindrique extérieur (2b) étant montée sur une surface périphérique extérieure de l'élément cylindrique intérieur (2a).

12. Vilebrequin selon la revendication 11, **caractérisé en ce que** l'élément cylindrique intérieur de l'élément de palier de bielle (2) est réalisé sous la forme d'un manchon cylindrique intérieur (2a).

13. Vilebrequin selon la revendication 11 ou 12, **caractérisé en ce que** le manchon cylindrique extérieur (2b) de l'élément de palier de bielle (2) est muni d'un revêtement, en particulier en céramique.

14. Vilebrequin selon la revendication 11 ou 12 **caractérisé en ce que** le manchon cylindrique extérieur (2b) de l'élément de palier de bielle (2) est réalisé en céramique.

15. Vilebrequin selon l'une quelconque des revendications 11 à 14, **caractérisé en ce que** le manchon cylindrique extérieur (2b) de l'élément de palier de bielle (2) et/ou l'élément cylindrique intérieur (2a) de l'élément de palier de bielle (2) comportent un dispositif à conduit d'huile de lubrification (7).

16. Vilebrequin selon la revendication 15 **caractérisé en ce que** le dispositif à conduit d'huile de lubrification (7) de l'élément de palier de bielle (2) comporte au moins une partie de conduit axiale (7a) qui s'étend dans le sens axial de l'élément de palier de bielle (2).

17. Vilebrequin selon la revendication 16 **caractérisé en ce que** la partie de conduit axiale (7a) est réalisée sous la forme d'une rainure dans la surface périphérique intérieure du manchon cylindrique extérieur (2b) de l'élément de palier de bielle (2) et/ou dans la surface périphérique extérieure de l'élément cylindrique intérieur (2a) de l'élément de palier de bielle (2).

18. Vilebrequin selon l'une quelconque des revendications 15 à 17 **caractérisé en ce que** le dispositif à conduit d'huile de lubrification (7) comporte au moins une partie de conduit annulaire (7b), qui s'étend dans le sens périphérique de l'élément de palier de bielle (2).

19. Vilebrequin selon la revendication 18, **caractérisé en ce que** la partie de conduit annulaire (7b) est réalisée sous la forme d'une rainure dans la surface périphérique intérieure du manchon cylindrique extérieur (2b) de l'élément de palier de bielle (2) et/ou dans la surface périphérique extérieure de l'élément cylindrique intérieur (2a) de l'élément de palier de bielle (2)

20. Vilebrequin selon l'une quelconque des revendications 15 à 19, **caractérisé en ce que** le dispositif à conduit d'huile de lubrification (7) de l'élément de palier de bielle (2) comporte au moins une partie de conduit radiale (7c) qui s'étend dans le sens radial de l'élément de palier de bielle (2) jusqu'à une surface périphérique extérieure du manchon cylindrique extérieur (2b).

21. Vilebrequin selon l'une quelconque des revendications 1 à 20, **caractérisé en ce qu'**une partie de surface périphérique extérieure d'une partie d'extrémité de l'élément de palier de vilebrequin (1) est logée dans l'ouverture pour palier de vilebrequin (4) du flasque de vilebrequin (3), une partie de surface périphérique extérieure d'une partie d'extrémité de l'élément de palier de bielle (2) est logée dans l'ouverture pour palier de bielle (5) du flasque de vilebrequin (3), dans lequel il est prévu un dispositif à conduit de liaison d'huile de lubrification (8), qui relie un dispositif à conduit d'huile de lubrification (6) de l'élément de palier de vilebrequin (1) à un dispositif à conduit d'huile de lubrification (7) de l'élément de palier de bielle (2).

22. Vilebrequin selon la revendication 21, **caractérisé en ce que** le dispositif à conduit de liaison d'huile de lubrification (8) comporte une partie de conduit annulaire (8a) dans le flasque de vilebrequin (3) dans la zone de l'ouverture pour palier de vilebrequin (4) et/ou dans la zone de la partie d'extrémité de l'élément de palier de vilebrequin (1), et comporte une partie de conduit annulaire (8b) dans le flasque de vilebrequin (3) dans la zone de l'ouverture pour palier de bielle (5) et/ou dans la zone de la partie d'extrémité de l'élément de palier de bielle (2), les parties de conduits annulaires (8a, 8b) étant reliées entre elles.

23. Vilebrequin selon la revendication 22, **caractérisé en ce que**, dans le flasque de vilebrequin (3) dans la zone de l'ouverture pour palier de vilebrequin (4) et/ou dans la zone de la partie d'extrémité de l'élément de palier de vilebrequin (1), la partie de conduit annulaire (8a) est réalisée sous la forme d'une rainure dans une surface périphérique intérieure de l'ouverture pour palier de vilebrequin (4) et/ou dans une surface périphérique extérieure de la partie d'extrémité de l'élément de palier de vilebrequin (1).

24. Vilebrequin selon la revendication 22 ou 23, **caractérisé en ce que**, dans le flasque de vilebrequin (3) dans la zone de l'ouverture pour palier de bielle (5) et/ou dans la zone de la partie d'extrémité de l'élément de palier de bielle (2), la partie de conduit annulaire (8b) est réalisée sous la forme d'une rainure dans une surface périphérique intérieure de l'ouverture pour palier de bielle (5) et/ou dans une surface périphérique extérieure de la partie d'extrémité de l'élément de palier de bielle (2).

25. Vilebrequin selon l'une quelconque des revendications 1 à 24, **caractérisé en ce que** le flasque de vilebrequin (3) est réalisé sensiblement plat, en particulier avec une épaisseur uniforme dans le sens axial du vilebrequin.

26. Vilebrequin selon la revendication 25, **caractérisé en ce que** le flasque de vilebrequin (3) comporte un premier et un deuxième élément de flasque de vilebrequin (3a, 3b) plats, qui sont sensiblement parallèles entre eux et qui sont en appui l'un contre l'autre par leurs faces latérales opposées l'une à l'autre.

27. Vilebrequin selon la revendication 26, **caractérisé en ce que** le premier élément de flasque de vilebrequin (3a) comporte l'ouverture pour palier de bielle (5) et le deuxième élément de flasque de vilebrequin (3b) comporte l'ouverture pour palier de vilebrequin (4).

28. Vilebrequin selon la revendication 26 ou 27, **caractérisé en ce que** le premier et le deuxième élément de flasque de vilebrequin (3a, 3b) ont chacun des surfaces de contour périphériques identiques.

29. Vilebrequin selon la revendication 28, **caractérisé en ce que** le premier et le deuxième élément de flasque de vilebrequin sont respectivement assemblés, en particulier, soudés l'un à l'autre dans la zone des surfaces de contour périphériques.

30. Vilebrequin selon l'une quelconque des revendications 26 à 29, **caractérisé en ce que**, dans le premier et/ou le deuxième élément de flasque de vilebrequin (3a, 3b) plats, est prévu un dispositif à conduit de liaison d'huile de lubrification (8) qui relie un dispositif à conduit d'huile de lubrification (6) de l'élément de palier de vilebrequin (1) à un dispositif à conduit d'huile de lubrification (7) de l'élément de palier de bielle (2), le dispositif à conduit de liaison d'huile de lubrification (8) comportant des évidements dans les faces latérales opposées du premier et/ou du deuxième élément de flasque de vilebrequin (3a, 3b) plats.

31. Procédé de montage d'un vilebrequin de structure modulaire, destiné au montage d'un vilebrequin selon les revendications 1 à 30, dans lequel un élément de palier de vilebrequin (1) est fixé dans une ouverture pour palier de vilebrequin (4) d'un flasque de vilebrequin (3) et dans lequel un élément de palier de bielle (2) est fixé dans une ouverture pour palier de bielle (5) du flasque de vilebrequin (3), procédé selon lequel l'élément de palier de bielle (2) est fixé dans l'ouverture pour palier de bielle (5) d'un flasque de vilebrequin (3) et forme un module de palier de bielle, de telle sorte que, dans le sens axial d'un axe de rotation (X) du vilebrequin, il subsiste une distance (k) entre une face frontale de l'élément cylindrique intérieur (2a) et une face latérale adjacente du flasque de vilebrequin (3), selon lequel l'élément de palier de vilebrequin (1) est fixé dans une ouverture pour palier de vilebrequin (4) d'un flasque de vilebrequin (3) suivant et forme un module de palier de vilebrequin, de telle sorte que, dans le sens axial d'un axe de rotation (X) du vilebrequin, il subsiste une distance (t) entre une face frontale du manchon cylindrique intérieur (1a) et une face latérale adjacente du flasque de vilebrequin (3), un module de palier de bielle et un module de palier de vilebrequin étant réunis successivement en alternance.

32. Procédé de montage d'un vilebrequin selon la revendication 31, **caractérisé en ce que**, lors du montage d'un module de palier de vilebrequin sur le module de palier de bielle, l'élément de palier de bielle (2) du module de palier de bielle est fixé dans une ouverture pour palier de bielle (5) du flasque de vilebrequin (3) du module de palier de vilebrequin et, lors du montage d'un module de palier de bielle sur un module de palier de vilebrequin, l'élément de palier de vilebrequin (1) du module de palier de vilebrequin est fixé dans une ouverture pour palier de vilebrequin (4) du flasque de vilebrequin (3) du module de palier de bielle.

33. Procédé de montage d'un vilebrequin selon la revendication 31 ou 32, **caractérisé en ce qu'**une bielle d'un seul tenant est montée sur l'élément de palier de bielle (2).

34. Procédé de montage d'un vilebrequin à structure modulaire, destiné au montage d'un vilebrequin selon l'une quelconque des revendications 26 à 30, dans lequel l'élément de palier de vilebrequin (1) est fixé dans une ouverture pour palier de vilebrequin (4) d'un flasque de vilebrequin (3) de telle sorte que, dans le sens axial d'un axe de rotation (X) du vilebrequin, il subsiste une distance (t) entre une face frontale du manchon cylindrique intérieur (1a) et une face latérale adjacente du flasque de vilebrequin (3), et dans lequel un élément de palier de bielle (2) est fixé dans une ouverture pour palier de bielle (5) du flasque de vilebrequin (3) de telle sorte que, dans le sens axial d'un axe de rotation (X) du vilebrequin, il subsiste une distance (k) entre une face frontale du manchon cylindrique intérieur (2a) et une face latérale adjacente du flasque de vilebrequin (3), et dans lequel le flasque de vilebrequin (3) comporte un premier et un deuxième élément de flasque de vilebrequin (3a, 3b) plats qui sont sensiblement parallèles entre eux et qui sont en appui l'un contre l'autre par leurs faces latérales opposées l'une à l'autre, procédé selon lequel un module de palier de bielle comporte un élément de palier de bielle (2), qui est fixé dans une ouverture pour palier de bielle (5) du premier élément de flasque de vilebrequin (3a), et un module de palier de vilebrequin comporte l'élément de palier de vilebrequin (1), qui est fixé dans une ouverture pour palier de vilebrequin (4) du deuxième élément de flasque de vilebrequin (3b) plat, le premier élément de flasque de vilebrequin (3a) plat du module de palier de bielle étant assemblé au deuxième élément de flasque de vilebrequin (3b) plat du module de palier de vilebrequin.

35. Procédé de montage d'un vilebrequin selon la revendication 34, **caractérisé en ce que** le module de palier de bielle comporte deux premiers éléments de flasque de vilebrequin (3a) plats qui sont fixés à des parties d'extrémité de l'élément de palier de bielle (2) et/ou le module de palier de vilebrequin comporte deux deuxièmes éléments de flasque de vilebrequin (3b) plats qui sont fixés à des parties d'extrémité de l'élément de palier de vilebrequin (1).

36. Procédé de montage d'un vilebrequin selon la revendication 34 ou 35, **caractérisé en ce que** le premier et le deuxième élément de flasque de vilebrequin (3a, 3b) plats sont assemblés l'un à l'autre par soudage au niveau de leur contour extérieur.

37. Procédé de montage d'un vilebrequin selon l'une quelconque des revendications 33 à 36, **caractérisé en ce que** le module de palier de bielle comporte une bielle d'une seule pièce.
